(19) Europäisches Patentamt / European Patent Office / Office européen des brevets

(11) **EP 2 149 132 B1**

(12) **EUROPÄISCHE PATENTSCHRIFT**

(45) Veröffentlichungstag und Bekanntmachung des Hinweises auf die Patenterteilung:
**01.05.2013 Patentblatt 2013/18**

(51) Int Cl.:
*G08G 1/16* *(2006.01)*          *G01C 21/26* *(2006.01)*
*G06K 9/00* *(2006.01)*

(21) Anmeldenummer: **08759680.5**

(22) Anmeldetag: **16.05.2008**

(86) Internationale Anmeldenummer:
**PCT/EP2008/056041**

(87) Internationale Veröffentlichungsnummer:
**WO 2008/145545 (04.12.2008 Gazette 2008/49)**

(54) **VERFAHREN UND VORRICHTUNG ZUR ERKENNUNG VON VERKEHRSRELEVANTEN INFORMATIONEN**

METHOD AND A DEVICE FOR IDENTIFYING TRAFFIC-RELEVANT INFORMATION

PROCÉDÉ ET DISPOSITIF D'IDENTIFICATION D'INFORMATIONS IMPORTANTES POUR LE TRAFIC

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.05.2007 DE 102007024695**

(43) Veröffentlichungstag der Anmeldung:
**03.02.2010 Patentblatt 2010/05**

(73) Patentinhaber:
• **Continental Teves AG & Co. OHG**
  **60488 Frankfurt (DE)**
• **Continental Engineering Services GmbH**
  **60489 Frankfurt am Main (DE)**

(72) Erfinder:
• **GROITZSCH, Stephan**
  **69469 Weinheim (DE)**
• **SCHORN, Matthias**
  **64367 Mühlbach (DE)**

(56) Entgegenhaltungen:
**EP-A- 1 503 354       EP-B- 1 114 371
DE-A1- 19 938 266**

**Beschreibung**

Gebiet der Erfindung

Die Erfindung betrifft ein Verfahren und eine Vorrichtung zur Erkennung von vexkehrsrelevanten Informationen in einem fahrenden Fahrzeug gemäß dem Oberbegriff der unabhängigen Ansprüche.

Technologischer Hintergrund

Verkehrsrelevante Informationen können insbesondere Verkehrzeichen sein, die beispielsweise die zulässige Höchstgeschwindigkeit angeben. Neben expliziten Verkehrszeichen bezieht sich die Erfindung aber grundsätzlich auf alle Informationen, die optisch oder auf andere Weise, wie zum Beispiel per Funk erfasst werden können und die ein bestimmtes Fahrverhalten, wie eine einzuhaltende Geschwindigkeit vorgeben. Es ist vorgesehen, dass die Bilddaten eines visuellen Sensors, insbesondere einer in Fahrtrichtung blickenden optischen Kamera, und die Kartendaten eines Navigationssystems zur Erkennung jeweils vorausgewertet und die Ergebnisse der Vorauswertung zusammengeführt und interpretiert werden. Erkennung jeweils vorausgewertet und die Ergebnisse der Vorauswertung zusammengeführt und interpretiert werden.

Viele Entwicklungen in modernen Kraftfahrzeugen dienen dazu, den Fahrer während des Fahrens auf verkehrsrelevante Informationen aufmerksam zu machen, um das Fahren insgesamt sicherer zu gestalten. Hierzu zählt insbesondere die Angabe der aktuell gültigen Höchstgeschwindigkeit, die neben einer reinen zusätzlichen Information für den Fahrer auch zur Erzeugung von Gefahrenmeldungen oder zum direkten Eingriff in die Geschwindigkeit des Fahrzeugs durch Bremsen oder auch Beschleunigen verwendet werden kann.

Seit geraumer Zeit sind Navigationssysteme bekannt, in denen neben dem Straßenverlauf und dem Straßentyp auch eine jeweils gültige Geschwindigkeitsbegrenzung mit eingegeben ist. Die Qualität dieser fest in den Straßenkarten eingegebenen Geschwindigkeitsbegrenzung hängt jedoch in erheblichem Maße von der Vollständigkeit und Aktualität der digitalisierten Karten ab. Nach einer Änderung von Geschwindigkeitsbegrenzungen dauert es erfahrungsgemäß eine geraume Zeit, bis diese neuen Geschwindigkeitsinformationen Eingang in die digitalen Kartendaten finden. Ein weitaus größeres Problem stellt dar, dass die digitalen Straßenkarten häufig in den Navigationssystemen gespeichert sind und durch den Nutzer erfahrungsgemäß vergleichsweise selten aktualisiert werden, da dies mit nicht unerheblichen Kosten verbunden ist.

Systematisch noch schwieriger ist es, temporäre Informationen zu erfassen, die beispielsweise durch Schilderbrücken an Autobahnen mit dem Verkehrsfluss angepassten Informationen und Geschwindigkeitsbegrenzungen oder an Baustellen vorgegeben werden. Gerade diese wechselnden Informationen sind besonders sicherheitsrelevant, da die dem Fahrer eines Kraftfahrzeugs so vorgegebenen Geschwindigkeitsbegrenzungen oder sonstigen Regeln dem aktuellen Verkehrsfluss oder einer akuten Gefahrensituation angepasst sind. Diese können durch die vorbeschriebenen Navigationssysteme jedoch nicht erfasst werden.

Hierzu schlägt die DE 199 38 261 A1 vor, temporäre Ortsgegebenheiten oder persönliche Fahrereindrücke streckenbezogen mit zu berücksichtigen, indem automatisch oder manuell eingebbare, temporäre Ortsgegebenheiten, wie beispielsweise temporäre Geschwindigkeitsbegrenzungen, Stauwarnungen oder dgl., als variable elektronische Streckenmarker setzbar sind, die bei wiederholtem Befahren der Stecke angezeigt werden und/oder auf den automatisch geregelten Betrieb des Kraftfahrzeuges regelnd eingreifen. Hierbei besteht jedoch das besondere Problem, dass diese Informationen in der Regel erst bei nochmaligem Befahren einer Strecke zur Verfügung stehen und gerade dann nicht abrufbar sind, wenn der Fahrer eine ihm unbekannte Strecke zum ersten Mal fährt.

Die DE 199 38 267 A1 schlägt ein System zur elektronischen Erkennung von Verkehrszeichen vor, die über eine Videokamera erfasst, nachfolgend gedeutet und innerhalb des Fahrzeugs angezeigt werden. Die erkannten Verkehrszeichen sollen in einer navigierbaren, elektronischen Streckenkarte standortbezogen abgespeichert werden, um die Qualität der digitalen Karte zu verbessern und eine bessere Korrelation von Verkehrszeichen zu navigierten Streckendaten zu ermöglichen. In Ergänzung wird hierzu durch die DE 199 38 266 A1 vorgeschlagen, bei nicht zweifelsfreier Erkennung eines Verkehrszeichens beziehungsweise eines von mehreren Verkehrszeichen automatisch eine logische Abwägung derart durchzuführen, dass weitergehende Verkehrsflussparameter und/oder Verkehrszeichen zur Deutung mit herangezogen werden und daraus die minimalst mögliche Geschwindigkeitsbegrenzung ermittelt wird. Die Abspeicherung dieser Daten erfolgt Standortkorreliert, wobei dem Fahrer eine Korrekturmöglichkeit eingeräumt wird.

Die DE 103 54 910 A1 offenbart ein autonomes Fahrzeug, das mit einem selbststeuernden Navigationssystem ausgestattet ist und am Straßenrand aufgestellte Verkehrszeichen beachtet. Eine Kamera nimmt dazu entlang der Autobahn aufgestellte Verkehrszeichen auf. Ein Bildprozessor analysiert diese Bilder und ermittelt den in den Verkehrszeichen enthaltenen Zeicheninhalt. Gleichzeitig sind in einer Navigations-Datenbank Karteninformationen über die Autobahn gespeichert. Eine elektronische Steuereinheit mit künstlicher Intelligenz ermittelt nun eine gegenwärtige Position des eigenständig fahrenden Kraftfahrzeugs und einen Straßenzustand auf der Basis der in der Navigations-Datenbank gespeicherten Karteninformationen und dem von dem Bildprozessor gelesenen Zeicheninhalt. Aufbauend auf dem Ergebnis der Ermittlungen steuert ein Prozessor dann eine Lenkoperation, eine Geschwindigkeits-Verringerungs/Erhöhungs-Operation und eine mit dem Selbststeuerungs-Navigationsbetrieb verbundene Operation. Dieses System ist jedoch zunächst auf Autobahnen begrenzt, da dort die verwendeten Zeichen limitiert und eine Interpretation und Erkennung der Zeichen wesentlich einfacher ist als auf vielen anderen Straßen, insbesondere in Städten mit oft unübersichtlicher Beschilderung.

Die EP 1 114 371 B1 beschreibt ein Verfahren und eine Vorrichtung zur Verkehrszeichenerkennung und Navigation. Bei einem Erkennen von Verkehrszeichen werden Verkehrszeichenerkennungsdaten erstellt und Navigationsdaten zur Lokalisierung des Fahrzeugs bereitgestellt, wobei die Verkehrszeichenerkennungsdaten und die Navigationsdaten miteinander abgeglichen und gegebenenfalls aktualisiert werden. Hierzu werden diese Daten einer gemeinsamen Auswerteeinheit zugeleitet, die eine aktuell gültige Geschwindigkeitsbeschränkung ermittelt und gegebenenfalls Steuersignale generiert.

Alle vorbeschriebenen Systeme haben jedoch mit dem Problem zu kämpfen, dass die aufgrund der Bilddatenerkennung gewonnenen Daten sehr umfangreich sind und die beschriebene Datenverarbeitung häufig nicht in Echtzeit erfolgen kann, zumindest wenn alle Bilddaten entsprechend ausgewertet werden.

Aus diesem Grund schlägt die EP 1 145 186 B1 ein System mit mindestens einem kartenbasierten Navigationssystem und einem System zum Anzeigen von Inhalten durch von einer Kamera aufgenommenen Verkehrszeichen vor, bei dem das System zur Verkehrszeichenerkennung mit erhöhter Leistung zu arbeiten beginnt, wenn auf Grundlage von kartenbasierten Informationen bekannt wird, dass das Fahrzeug einen Bereich passiert, der bezüglich der Erkennung von Verkehrszeichen problematisch ist. Dazu wird ein Multiprozessorsystem zur Nutzung freier Datenkapazitäten im gesamten Kraftfahrzeug ausgenutzt. Hierbei besteht allerdings das Problem, dass die erhöhte Rechenkapazität nur dann zur Verfügung steht, wenn dem zugrundeliegenden kartenbasierten System bereits Informationen darüber vorliegen, dass eine für die Bilderfassung gegebenenfalls schwierig auszuwertende Situation entstehen könnte.

Die EP 1 503 354 A1 zeigt ein Verfahren zur Generierung von Verkehrshinweisen durch die Interpretation von Verkehrsszenarien und Navigationsinformation in einem Fahrzeug, das die Merkmale des Obergriffs von Anspruch 1 umfasst. Verkehrszeichen können durch eine videobasierte Erfassung erkannt werden bzw. Verkehrszeicheninformationen können in der digitalen Karte eines Navigationssystems enthalten sein. Diese Eingangsinformationen werden einem Situationsbewertungsmodul zugeführt, das mittels Relevanzbewertung, Priorisierung, Geometrie- und Topologie-Bewertung bzw. Konsistenzbewertung aus den Eingangsinformationen Verkehrshinweise erzeugt. Verkehrsregeln werden in unterschiedlichen Bewertungsschritten berücksichtigt und können beispielweise aus Länderinformationen bezüglich des aktuellen Landes sowie der Interpretation von Verkehrsregeln im aktuellen Land des Navigationssystems entnommen werden.

Demgegenüber ist es die Aufgabe der Erfindung, eine Möglichkeit zur Erkennung verkehrsrelevanter Informationen auf der Basis von Sensordaten eines visuellen Sensors und Kartendaten eines Navigationssystems vorzuschlagen, welche die erkannten Sensordaten und die erkannten Kartendaten einer gemeinsamen Analyse unterzieht, einfach anpassbar ist und schnell verlässliche Informationen liefert. Beispielsweise soll das vorgeschlagene System eine Information über die aktuell zulässige Höchstgeschwindigkeit ausgeben.

Diese Aufgabe wird erfindungsgemäß mit den Merkmalen der unabhängigen Ansprüche gelöst.

Bei dem Verfahren zur Erkennung von verkehrsrelevanten Informationen der eingangs genannten Art ist dazu insbesondere vorgesehen, dass die Sensordaten in einer ersten Szeneninterpretation nach enthaltenen verkehrsrelevanten Informationen durchsucht und auf die relevanten Sensordaten verdichtet werden.

Es ist zu beachten, dass es sich bei dem Sensor um einen optischen Sensor, wie eine Kamera, handeln kann. Der Sensor kann aber auch als Radar- oder Lidarsensor ausgeführt sein oder z.B. als Funkempfänger oder in RFID-Technik, der Funksignale der aktiv sendenden Verkehrszeichen empfängt. Es ist auch ein System denkbar, dass ähnlich TMC für Streckenabschnitte die zulässigen Höchstgeschwindigkeiten übermittelt, so dass nicht zwangsläufig jedes einzelne Verkehrszeichen einen Sender haben muss, sondern die Übermittlung der Informationen bzgl. der Verkehrszeichen von einem zentralem Sender aus möglich ist.

Die Sensorrohdaten werden in der vorgelagerten Aufbereitung 7 mit z.B. Verfahren aus der Bildverarbeitung wie der Kantenfindung, der Kreisfindung, des Trackings, der Klassifikation mit Hilfe eines trainierten Klassifikators bearbeitet. Das Ergebnis sind dann detektierte und einer Klasse zugeordnete Verkehrszeichen. Diese wiederum werden in der Szeneninterpretation Sensordaten 10 (also z.B. Szeneninterpretation Bilddaten 10) als Unterblock von dem Fusionsmodul 2 auf die relevanten Informationen verdichtet, eine Interpretation der jeweiligen "Szene" wird durchgeführt. Die verkehrsrelevanten Informationen können dabei bestimmte Verkehrszeichen, insbesondere die Geschwindigkeit begrenzende Verkehrszeichen, Fahrbahnmarkierungen, Hindernisse oder dergleichen sein, die Auswirkungen auf das Fahrverhalten und insbesondere die zulässige oder angemessene Höchstgeschwindigkeit haben.

Ferner werden die Karteninformationen in einer zweiten Szeneninterpretation nach enthaltenen verkehrsrelevanten Informationen durchsucht und ebenso auf relevante Karteninformationen verdichtet. Die verkehrsrelevanten Informationen der Kartendaten können beispielsweise im Kartenmaterial eingegebene Informationen zu Geschwindigkeitsbegrenzungen, Überholverbot oder sonstigen aktuellen Informationen eines Telematiksystems, wie Unfälle, Hindernisse, Baustellen und dergleichen, sein. Auch Informationen über topologische Gegebenheiten, wie beispielsweise Bereich einer Abfahrt, Kreisverkehr, sowie Informationen über den aktuell befahrenen Straßenabschnitt, wie die Straßenklasse, Anzahl der Fahrspuren, Straßenverlauf inner- oder außerorts, Rechts- oder Linksverkehr, Land, gehen hierbei ein.

Gegebenenfalls können die erste und die zweite Szeneninterpretation bestimmte Informationen auch austauschen, um erste Unklarheiten bei der Erkennung von verkehrsrelevanten Informationen in den Szeneninterpretation (wie z.B. Bilddaten) oder den Kartendaten anhand der jeweils anderen, zur Verfügung stehenden Daten auszuräumen und eine effektive Datenverdichtung (Bildverdichtung) vornehmen zu können. Die verdichteten (Bild)Informationen können beispielsweise als Vektoren in einem definierten Datenformat ausgegeben werden.

Anschließend werden die als relevant erkannten und verdichteten Sensor- und Kartendaten einem Regelwerk und einem Zustandsautomaten zur Interpretation der Sensor- und Kartendaten zugeführt, wobei das Regelwerk die Sensordaten und die Kartendaten auswertet und eine auszuführende Aktion an den Zustandsautomaten weitergibt. Der Zustandsautomat führt aufgrund der ihm durch das Regelwerk vorgegebenen, auszuführenden Aktion eine Transition zwischen vordefinierten Zuständen durch und gibt eine der Transition oder dem durch die Transition erreichten (neuen) Zustand zugeordnete Information aus.

Erfindungsgemäß sind in dem Zustandsautomaten Zustände definiert, die Eigenschaften des fahrenden Kraftfahrzeuges und gegebenenfalls der Umgebung charakterisieren. Solche Informationen enthalten beispielsweise die Geschwindigkeit des Fahrzeuges, das Ansprechen von sicherheitsrelevanten Sensoren wie der Gierraten, dem Beschleunigungs- oder Verzögerungsdaten, Angaben über die Art und den Zustand der Straße, Statusangaben zu dem visuellen Sensor und/oder dem Kartenmaterial, insbesondere dessen Alter, und/oder dergleichen. Es wird erfindungsgemäß auf Daten aus dem Sensorcluster eines ESP-System zugegriffen. Die von dem erfindungsgemäßen System zu berücksichtigende Kombinationen von Fahrzeug- oder Umgebungseigenschaften sind als Zustände des Zustandsraums vordefiniert und charakterisieren - losgelöst von einer Straßenverkehrsordnungs konformen Interpretation des Zustands anhand der Erkennung von verkehrsrelevanten Informationen - den Zustand, in dem sich das fahrende Kraftfahrzeug in seiner Umgebung gerade befindet.

In der zeitlichen Entwicklung kann sich der Zustand des fahrenden Fahrzeugs ändern. Dies geschieht beispielsweise dann, wenn das Fahrzeug aus einem Bereich ohne Geschwindigkeitsbegrenzung in einen Bereich begrenzter Geschwindigkeit einfährt, der insbesondere durch ein Verkehrszeichen, beispielsweise aber auch durch eine bestimmte bauliche Situation der Straße (zweispurige Straße mit befestigter Mittelleitplanke) oder sonstige Gegebenheiten definiert sein kann. Sobald die Sensordaten des visuellen Sensors und/oder die Kartendaten eines Navigationssystems das Vorliegen einer derartigen verkehrsrelevanten Information ermitteln, werden die verdichteten Informationen in dem Regelwerk ausgewertet und das Ergebnis dieser Auswertung als auszuführende Aktion an den Zustandsautomaten übersandt. Der Zustandsautomat wertet die auszuführende Aktion des Regelwerks als Transition in seinem Zustandsraum, bei dem ausgehend von dem Anfangszustand in einen neuen oder gegebenenfalls wieder denselben Endzustand gewechselt wird. Die Transition oder der neu erreichte Zustand kann je nach Art der Transition mit einer bestimmten, dem Zustand zugeordneten Informationsausgabe verbunden sein, beispielsweise dem Hinweis an den Autofahrer, dass er aus einem geschwindigkeitsbegrenzungsfreien Straßenabschnitt in einen geschwindigkeitsbegrenzten Abschnitt mit der Geschwindigkeit von 80 km/h eingefahren ist.

Je nach Implementierung des erfindungsgemäßen Systems kann diese durch den Zustandsautomaten ausgegebene Information neben einer Information des Fahrers auch zum unmittelbaren Eingriff in das Kraftfahrzeug durch Entfalten beispielsweise einer Bremswirkung umgesetzt werden wobei eine Vorgabe einer Geschwindigkeit für einen Limiter, eine Vorgabe einer Geschwindigkeit für Adaptive Cruise Control erfindungsgemäß angedacht ist, wenn das Kraftfahrzeug schneller fährt als es die aktuellen verkehrsrelevanten Informationen über die maximale Höchstgeschwindigkeit anzeigen.

Das erfindungsgemäße System weist in seiner Struktur einen modularen Aufbau auf, der es ermöglicht, die Funktionen des erfindungsgemäßen Verfahrens sowie der zugehörigen Vorrichtung einfach zu ändern und anzupassen. So können beispielweise in der Szeneninterpretation neue Verkehrschilder oder sonstige Informationen eingepflegt werden, die zu von dem System bereits verwertbaren verdichteten Bild- oder Kartendaten weiterverarbeitet werden, ohne dass weitere Anpassungen in dem Regelwerk oder dem Zustandsautomaten notwendig sind.

Auch die Aufteilung der Recheneinheit in ein Regelwerk, das die Straßenverkehrsordnungs konforme Auslösung widersprüchlicher Situationen in den bereitgestellten Eingangsdaten ermöglicht, und einen Zustandsautomaten, der den von einer Regelinterpretation im Wesentlichen freien Zustand des Kraftfahrzeugs und der Umgebung definiert, können Regelsätze leicht geändert und adaptiert werden. Beispielsweise ist es so möglich, Regelsätze für verschiedene Länder einfach vorzugeben und in das System modular nachzuladen, indem das Regelwerk bei einem Grenzübertritt aktualisiert wird. Alternativ können bei Verwendung lediglich eines Regelwerks bestimmte Regeln in einem Land aktiviert/deaktiviert werden und es ist angedacht das Regelwerk länderspezifisch vollständig auszutauschen. Eine weitere Alternative ist der ländespezifische Austausch von Regeln im Regelwerk, die abhängig sind von länderspezifischen Anforderungen bzgl. der vorliegenden Rechtsnormen für den Straßenverkehr. Änderungen in dem Zustandsautomaten sind dabei in der Regel nicht notwendig, weil dort der von der Regelinterpretation grundsätzlich unabhängige Zustand des Kraftfahrzeugs definiert ist.

Die einzelnen Einheiten oder Module des Systems können beliebig komplex aufgebaut werden, ohne dass der einfache modulare Aufbau des Gesamtsystems geändert wird. Dies ermöglicht auch bei der Erkennung komplexer Daten eine zügige Echtzeitverarbeitung. Mit geringem Aufwand kann so auch eine Anpassung an eventuell in Zukunft denkbare andere Eingabequellen (beispielsweise Fahrzeugdaten Dritter aus Telematik-Anwendungen) erfolgen, auf die sich vorliegende Erfindung auch bezieht.

Erfindungsgemäß ist es besonders vorteilhaft, wenn in dem Regelwerk die inhaltliche Interpretation der relevanten Bild- und Kartendaten anhand spezifischer Regelsätze erfolgt und die durch das Regelwerk vorgegebene Aktion ein aufgrund der erkannten Regel einzuhaltendes Verhalten parametrisiert. Damit wird der Teil der Erkennung verkehrsrelevanter Informationen, der eine inhaltliche Bewertung der erfassten Bild- und/oder Kartendaten erforderlich macht, in einen logisch eigenständigen Block integriert, der bei einer von außen vorgegebenen Änderung, beispielsweise durch Änderung der Leistungsfähigkeiten der Eingangssignalquellen, durch Änderung der Straßenverkehrsordnung oder Fahrt in ein anderes Land mit geänderten Verkehrsregeln, einfach angepasst werden kann. Dazu ist es vorteilhaft, ein transparentes, leicht anzupassendes Regelwerk auszuwählen, unter anderem auch, um eine einfache Anpassung an unterschiedliche Ländervarianten zu ermöglichen.

Eine erfindungsgemäß besonders vorteilhaft verwendbare Abbildung des Regelwerks kann durch eine Matrix erreicht werden, die durch einen Algorithmus auswertbar ist. Dies bietet sich insbesondere dann an, wenn die relevanten Bild- und Kartendaten sowie gegebenenfalls weitere Daten wie Statusinformationen über den Zustand des visuellen Sensors oder Fahrzeuginformationen wie Geschwindigkeit, Umgebungstemperatur, Straßenzustand (Nässe, Schnee, Glatteis), ESP-Daten oder dergleichen als Vektorinformationen vorliegen und dem Regelwerk und Zustandsautomaten in dieser Form übermittelt werden. Durch eine geeignete Matrixoperation lässt sich dann aus den erkannten Bild- beziehungsweise Kartendaten in mathematisch einfacher Form eine entsprechende Aktion ableiten. Das Regelwerk wird zwar in Form zweier Arrays abgelegt, zur Auswertung der Regeln werden allerdings keine "klassischen" Matrizenoperationen verwendet.

Gemäß einer besonders bevorzugten Ausführungsform weist der Zustandsautomat definierte Zustände auf, in denen sich das Fahrzeug und/oder seine Umgebung befinden kann (oder darf), wobei die auszuführenden Aktionen des Regelwerks in dem Zustandsautomaten eine Transition eines definierten Zustands auf einen anderen definierten Zustand oder auf sich selbst bewirken. Durch die erfindungsgemäße Definition eines Zustandsraums mit vorausgewählten, vorgegebenen Zuständen wird ein einfaches, modulares System geschaffen, in dem eine Aussage über die Auswirkungen einer Regel aufgrund des Erkennens verkehrsrelevanter Informationen ohne hohe Rechenleistung sowohl zur Definition eines neuen Zustands von Fahrzeug und/oder Umgebung als auch zur Ausgabe von Informationen in einem Display oder an eine Fahrzeugsteuerung erreicht werden kann.

Hierzu ist es besonders vorteilhaft, wenn jede Transition selbst in dem Zustandsautomaten mit einer Ausgabe von Informationen verbunden ist, beispielsweise zu einem Anzeigeninstrument des Fahrzeugs. Auf diese Weise wird bei einer durchzuführenden Transition eine erforderliche Datenausgabe besonders schnell realisiert.

Erfindungsgemäß meldet der Zustandsautomat seinen aktuellen Zustand auch an das Regelwerk zurück, damit das Regelwerk bei der Interpretation der relevanten Bild- oder Kartendaten auch den Zustand des Fahrzeugs und/oder der Umgebung mit berücksichtigen kann. Um dies zu erreichen, können die relevanten, verdichteten Bilddaten und die relevanten, verdichteten Kartendaten zeitgleich dem Regelwerk und dem Zustandsautomaten zugeführt werden, so dass der aktuelle Zustand durch den Zustandsautomaten gegebenenfalls noch während der Auswertung der Regel in dem Regelwerk zurückgemeldet wird. Sofern dies bei bestimmten Regeln gewünscht ist, kann die Regel beispielsweise auch vorsehen, dass eine aktuelle Zustandsinformation vor Auswertung der Regel in dem Regelwerk vorhanden sein muss.

Erfindungsgemäß kann der Zustandsautomat in eine Hauptzustandsmaschine, welche insbesondere das Ausgabeverhalten des Zustandsautomaten abbildet und beispielsweise den Zustand des Fahrzeug charakterisierende Informationen verarbeitet, und eine oder mehrere Umgebungszustandsmaschinen aufgeteilt werden, welche besondere und insbesondere temporär veränderliche Umgebungsbedingungen des Fahrzeugs abbilden, beispielsweise eine Baustellen- oder Wechselverkehrszeichenstrecke. Durch die Aufteilung des Zustandsautomaten in mehrere verschiedene Zustandsmaschinen kann auch eine parallele Verarbeitung mehrerer Transitionen aufgrund einer durch das Regelwerk vorgegebenen, auszuführenden Aktion umgesetzt werden.

Gemäß einer besonders bevorzugten Ausführungsform des erfindungsgemäßen Verfahrens senden die erste und die zweite Szeneninterpretation bei dem Verdichten auf relevante Bild- oder Kartendaten, d.h. bei dem Vorliegen und Erkennen verkehrsrelevanter Daten, ein Triggersignal an eine Trigger-Steuerung, welche dann ein Gesamttriggersignal für das Rechenwerk und den Zustandsautomaten erzeugt. Das Gesamttriggersignal bewirkt, dass das Regelwerk und der Zustandsautomat die an ihren internen Eingängen anliegenden verdichteten bzw. relevanten Bild- und Kartendaten verarbeiten. Nach Erhalt des Gesamttriggersignals bestimmt das Regelwerk die auszuführende Aktion und der Zustandsautomat ermittelt aus den vorliegenden Informationen seinen Zustand, damit er nach Erhalt der auszuführenden Aktion eine Transition aus seinem Ausgangszustand in einen neuen Zustand durchführen kann. Erfindungsgemäß kann das Regelwerk nach Abschluss seiner Regelinterpretation und gegebenenfalls gemeinsam mit der Ausgabe der Aktion ein zusätzliches Triggersignal an den Zustandsautomaten senden, damit dieser die Transition unmittelbar vornimmt.

Gemäß einer einfachen Ausführungsform kann die Trigger-Steuerung eine ODER-Verknüpfung der beiden Triggersignale der ersten und zweiten Szeneninterpretation zur Erzeugung des Gesamttriggersignals bilden.

Eine bevorzugte Variante der Trigger-Steuerung sieht jedoch vor, bei Anliegen eines ersten Triggersignals von der ersten oder der zweiten Szeneninterpretation einen Zähler, beispielsweise einen Entfernungszähler, der die aktuelle Fahrzeuggeschwindigkeit integriert, zu aktivieren und entweder bei Ablauf eines maximalen Zählerwerts, im Beispiel also einer maximalen zurückgelegten Entfernung, oder dem Anliegen des zweiten Triggersignals von der zweiten oder der ersten Szeneninterpretation das Gesamttriggersignal zu erzeugen. Damit können zeitliche Asynchronitäten zwischen verschiedenen Daten abgefangen werden und der optimale Zeitpunkt für die Auswertung der Daten durch das Regelwerk und den Zustandsautomaten definiert werden. Vorzugsweise können Regelwerk und Zustandsautomat das Gesamttriggersignal zur gleichen Zeit erhalten, damit die Regelauswertung und der im Zustandsautomat erkannte Zustand auf den selben Daten beruhen und die durch die Aktion des Regelwerks ausgelöste Transition auch von dem richtigen Zustand im Zustandsautomaten ausgeht. Vorteilhaft ist es angedacht in einer weiteren Ausführungsform das Gesamttriggersignal GT derart generiert werden, dass bei Anliegen des Triggers von der Vorverarbeitung der Bilderkennungsdaten sofort das Gesamttriggersignal GT ausgelöst und lediglich bei Anliegen des Triggers von der Vorverarbeitung der Karteninformationen gewartet wird.

Vorteilhafterweise werden in der ersten und/oder zweiten Szeneninterpretation anhand vorgegebener Kriterien relevante Bild- und/oder Kartendaten selektiert. Dazu können zu verschiedenen Zeitpunkten erfasste relevante Bild- und/oder Kartendaten in einen zeitlichen Zusammenhang gestellt werden. Die zu verschiedenen Zeitpunkten durch den Sensor detektierten Verkehrzeichen oder sonstigen Informationen werden also in einen Gesamtzusammenhang gestellt und hierdurch beispielsweise der Zeitpunkt ermittelt, an dem ein Verkehrszeichen durch das fahrende Kraftfahrzeug tatsächlich passiert wird. Ferner kann aus der Kenntnis der Kamera- beziehungsweise Sensorposition und dem Ort des Verkehrzeichens auf der Sensorfläche, beispielsweise den Pixel einer CCD-Kamera, eine örtliche Auswahl relevanter Bilder getroffen werden, wobei eine zeitliche und örtliche Korrelation zwischen den Signalen eine noch genauere Interpretation der Szene zulässt. Die örtliche und zeitliche Korrelation bei Daten bietet sich beispielsweise bei Schilderbrücken an, bei denen die für die Fahrspur relevanten Informationen ohne eine ortsaufgelöste Detektierung nur schwer zu ermitteln sind. Im Rahmen von Kartendaten ist es ferner möglich, aus dem derzeitigen Geschwindigkeitsvektor des Kraftfahrzeugs eine Vorschau der in Kürze vermutlich relevanten Informationen zu erzeugen. In diesem Zusammenhang ist es sinnvoll, wenn die erste und zweite Szeneninterpretation insbesondere die bereits verdichteten Bild- oder Kartendaten austauschen, damit erkannte Informationen einer Szeneninterpretation bei der anderen Szeneninterpretation herangezogen werden können.

Insbesondere damit die erste und zweite Szeneninterpretation relativ zueinander in einer vergleichbaren Geschwindigkeit arbeiten, kann erfindungsgemäß vorgesehen werden, dass die Bilddaten des visuellen Sensors in einer der Szeneninterpretation vorgelagerten Aufbereitung auf eine Vorauswahl zu untersuchender Bilddaten und eine Statusinformation (Kamerastatusdaten) reduziert werden. Die Statusinformation kann beispielsweise den Qualitätszustand der Kamera (Dunkelheit, verschmutzte Windschutzscheibe oder dergleichen) anzeigen. Auch kann diese Statusinformation im Rahmen des Regelwerks verwendet werden, um bei abweichenden Informationen zwischen Bild- und Kartendaten eine Aussage zu treffen, welche der beiden Daten mit höherer Wahrscheinlichkeit zutreffend sind.

Wie bereits erwähnt können die erste und die zweite Szeneninterpretation erfindungsgemäß Informationen austauschen, um eine optimale Verdichtung der Bild- und Kartendaten in jeder Szeneninterpretation zu erreichen. Insbesondere sollten das Erkennen verkehrsrelevanter Informationen in einer der Szeneninterpretationen unmittelbar der anderen Szeneninterpretation übermittelt werden.

Zusätzlich ist es besonders vorteilhaft, wenn Fahrzeugrohdaten, beispielsweise Fahrzeugsensordaten wie ESP, Geschwindigkeit oder dergleichen, und/oder Kamerastatusdaten, beispielsweise Helligkeit, Bildqualität oder dergleichen, bei dem Prozess des Erkennens verkehrsrelevanter Informationen insgesamt zur Verfügung stehen, insbesondere in den Szeneninterpretationen, dem Regelwerk und/oder dem Zustandsautomaten.

Neben dem vorbeschriebenen Verfahren bezieht sich die Erfindung auch auf eine Vorrichtung zur Erkennung von verkehrsrelevanten Informationen in einem fahrenden Fahrzeug mit einem Anschluss an das System eines virtuellen Sensors zum Erhalten von Bilddaten, einem Anschluss an ein Navigationssystem zum Erhalten von Kartendaten und einem Anschluss an ein Anzeigeinstrument zum Darstellen oder Verarbeiten der Ergebnisse der Erkennung. Die erfindungsgemäß vorgeschlagene Vorrichtung ist insbesondere zur Durchführung der vorbeschriebenen Verfahrensschritte eingerichtet.

Dazu weist die Vorrichtung Mittel zur Szeneninterpretation zur Verdichtung der erhaltenen Sensor- bzw. Bilddaten des (z.B. visuellen) Sensors und der Kartendaten des Navigationssystems sowie zur Weiterleitung der verdichteten Sensor- und Kartendaten an eine Recheneinheit mit einem Regelwerk und einem Zustandsautomaten auf. Die Mittel zur Szeneninterpretation können im Falle der Verarbeitung von Bilddaten insbesondere Einrichtungen mit einer Bildverarbeitungs- und Erkennungssoftware sein. Im Falle der Kartendaten des Navigationssystems können die Mittel zur Szeneninterpretation insbesondere Filtermittel sein, welche die Kartendaten auf die gewünschten verkehrsrelevanten Informationen filtern.

Das Regelwerk ist erfindungsgemäß dazu eingerichtet, die von der Szeneninterpretation erhaltenen, verdichten Bild- und Kartendaten auszuwerten und auszuführende Aktionen an den Zustandsautomaten weiterzuleiten. Der erfindungsgemäße Zustandsautomat ist dazu eingerichtet, aufgrund der auszuführenden Aktion in seinem Zustandsraum mit vordefinierten Zuständen eine Transition durchzuführen und dem neuen Zustand oder der Transition zugeordnete Informationen über den Anschluss an das Anzeigeinstrument auszugeben. Das Anzeigeinstrument kann dabei ein optisches Display, eine akustische Ausgabeeinrichtung oder ein Steuergerät sein, welches unmittelbar in Fahrzeugfunktionen eingreift und beispielsweise ein Bremsung initiiert, wenn das Fahrzeug schneller ist als es eine vorgegebene Höchstgeschwindigkeit erlaubt. Es ist auch angedacht, dass eine Verknüpfung zu anderen Fahrerassistenzsystemen, wie beispielsweise Cruise Control, Adaptive Cruise Control oder Limiter, hergestellt wird.

Gemäß einer besonders bevorzugten Ausführungsform ist den Mitteln zur ersten und zweiten Szeneninterpretation eine Trigger-Steuerung (Trigger) zur Erzeugung eines Gesamttriggersignals nachgeschaltet, welches insbesondere als Startsignal für das Regelwerk dient und der Zustandsautomat wird wegen der Überwachung der Gültigkeitslängen von Verkehrszeichen immer ausgeführt. Falls ein Zeichen nicht mehr gültig zu sein scheint, kann der Zustandsautomat das Regelwerk wiederum triggern. Der Zustandsautomat kann je nach Ausgestaltung des erfindungsgemäßen Konzepts jedoch auch durch ein gesondertes Triggersignal des Regelwerks angestoßen werden.

Gemäß einer vorteilhaften Ausgestaltung der erfindungsgemäßen Vorrichtung können die Mittel zur ersten und zweiten Szeneninterpretation, der Trigger und die Recheneinheit mit dem Regelwerk und dem Zustandsautomaten ein gemeinsames Fusionsmodul bilden, in dem die Verbindungen zwischen den einzelnen Einheiten durch besonders schnelle interne Schnittstellen realisiert sind, die weniger störanfällig sind als externe Schnittstellen. Vorzugsweise kann das gesamte Fusionsmodul als eine Geräteeinheit ausgebildet sein, die eine Recheneinheit mit Speicher, Rechenwerk und externen Anschlüssen aufweist, und in der das zuvor beschriebene Verfahren implementiert ist. Natürlich ist es auch möglich, das Fusionsmodul auf mehrere, separate Geräte aufzuteilen, oder aber das Fusionsmodul direkt auf dem Steuergerät der Kamera, im Steuergerät des Navigationssystems oder im Steuergerät des Anzeigeinstruments laufen zu lassen.

In dem Fusionsmodul können auch die Mittel zur vorgelagerten Aufbereitung der Bilddaten enthalten sein, so dass die Kamera beziehungsweise der visuelle Sensor und gegebenenfalls andere Sensoren unmittelbar an das Fusionsmodul angeschlossen werden können. Dies kann auch durch Abgriff der entsprechenden Informationen auf einem Datenbus erfolgen. Dann kann die Aufbereitung sämtlicher Daten in dem erfindungsgemäßen Fusionsmodul stattfinden, dessen Ausgangsschnittstelle vorzugsweise auch wieder an den Datenbus anschlossen wird und die verkehrsrelevanten Informationen in einem standardisierten, durch verschiedene andere Geräte des Fahrzeugs auswertbaren Datenformat zur Verfügung stellt.

Erfindungsgemäß stellt also der modulare Aufbau des vorgeschlagenen Systems (Verfahren und Vorrichtung) zur Erkennung von verkehrsrelevanten Informationen einen besonderen Vorteil bei der Implementierung derartiger Einrichtungen in einem Kraftfahrzeug dar, weil die Aufteilung der Interpretation der kombinierten Bild- und Kartendaten in einem Regelwerk und einem Zustandsautomaten einfach und flexibel handhabbar ist. Die Interpretationsvorgaben können in ein transparentes und leicht handhabbares Regelwerk integriert werden, das leicht an mögliche Änderungen angepasst werden kann. Das Regelwerk enthält die eigentliche Entscheidungslogik, die auf den Zustandsautomaten mit vergleichsweise geringer Komplexität angewendet wird, um die entsprechenden Ausgaben zu Erzeugen. Änderungen des Regelwerks lassen sich programmtechnisch leicht verwalten und gegebenenfalls auch im Rahmen von üblichen Inspektionen aktualisieren. Außerdem stellt die Verwendung von Zustandsautomaten ein programmtechnisch sehr robustes System dar, das auch bei sicherheitsrelevanten Anwendungen eine hohe Prozesssicherheit bietet und überraschenderweise trotz des statischen Aufbaus auch zur Beschreibung von Zuständen eines fahrenden Kraftfahrzeugs im Bereich der Erkennung verkehrsrelevanter Informationen, insbesondere Verkehrszeichen und Geschwindigkeitsbegrenzungen, eingesetzt werden kann.

Gemäß einem weiteren Ausführungsbeispiel der Erfindung ist die Vorrichtung zur Bereitstellung einer Geschwindigkeitsbegrenzungs-Assistenz für das Fahrzeug ausgeführt (z.B. durch einen sog. Limiter).

Gemäß einem weiteren Ausführungsbeispiel der Erfindung ist die Vorrichtung zur Ermittlung einer aktuell zulässigen Höchstgeschwindigkeit bei parallel existierenden, von dem Sensor wahrnehmbaren Signalen ausgeführt, wobei die wahrgenommenen Signale mit entsprechenden Geschwindigkeitsbegrenzungen mit unterschiedlichen Gültigkeiten korrespondieren. Die parallelen Signale können zum Beispiel von mehreren Verkehrszeichen stammen.

In anderen Worten ist die Vorrichtung in der Lage, im Falle einer Mehrfachbeschilderung mit unterschiedlichen Geschwindigkeitsbeschränkungen genau das Schild zu detektieren und auszuwählen, welches aktuell gültig ist. Sofern keine Informationen über die Geschwindigkeitsbegrenzungen mit ihren Zusatzzeichen, mit deren Hilfe die Gültigkeit des jeweiligen Zeichens angegeben wird, aus der digitalen Straßenkarte verfügbar sind, oder aber keine Möglichkeit besteht auszuwerten, welche Gültigkeitsbedingung aktuell erfüllt ist, kann über einen Parameter konfiguriert werden, ob als konservative Auslegung die niedrigere Geschwindigkeitsbegrenzung oder als progressive Auslegung die höhere Geschwindigkeitsbegrenzung ausgegeben werden soll. Als dritte Alternative können beide Geschwindigkeitsbegrenzungen (sofern vorhanden mit der jeweiligen Gültigkeitsinformation) ausgegeben werden, so dass der Fahrer entscheiden kann, welche Geschwindigkeitsbegrenzung aktuell gilt.

Gemäß einem weiteren Ausführungsbeispiel der Erfindung weist die Vorrichtung einen modularen Aufbau auf, so dass einzelne Komponenten leicht ausgetauscht werden können. Weiterhin kann das Regelwerk als Software-Modul ausgeführt sein, und ist beispielsweise in der Programmiersprache C oder C++ programmiert.

Gemäß einem weiteren Ausführungsbeispiel der Erfindung ist ein System für ein Fahrzeug angegeben, welches eine oben beschriebene Vorrichtung sowie einen Sensor, ein Navigationssystem und ein Anzeigeinstrument aufweist.

Weiterhin ist ein Fahrzeug mit einem solchen System angegeben.

Gemäß einem weiteren Ausführungsbeispiel der Erfindung ist ein Programmelement angegeben, das, wenn es auf einem Prozessor ausgeführt wird, den Prozessor anleitet, die oben beschriebenen Verfahrensschritte auszuführen.

Gemäß einem weiteren Ausführungsbeispiel der Erfindung ist ein computerlesbares Medium angegeben, auf dem ein Programmelement gespeichert ist, das, wenn es auf einem Prozessor ausgeführt wird, den Prozessor anleitet, die oben beschriebenen Verfahrensschritte durchzuführen.

Weitere Merkmale, Vorteile und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:

Fig. 1     schematisch die Einbindung einer erfindungsgemäßen Vorrichtung zur Erkennung von verkehrsrelevanten Informationen in ein Kraftfahrzeug und

Fig. 2     den Aufbau der erfindungsgemäßen Vorrichtung im Detail.

Fig. 3     zeigt eine schematische Darstellung eines Fahrzeugs mit einem System gemäß einem Ausführungsbeispiel der vorliegenden Erfindung.

Fig. 4     zeigt ein Flussdiagramm eines Verfahrens gemäß einem Ausführungsbeispiel der vorliegenden Erfindung.

Die Darstellungen in den Figuren sind schematisch und nicht maßstäblich.

In der folgenden Figurenbeschreibung werden für die gleichen oder ähnlichen Elemente die gleichen Bezugsziffern verwendet.

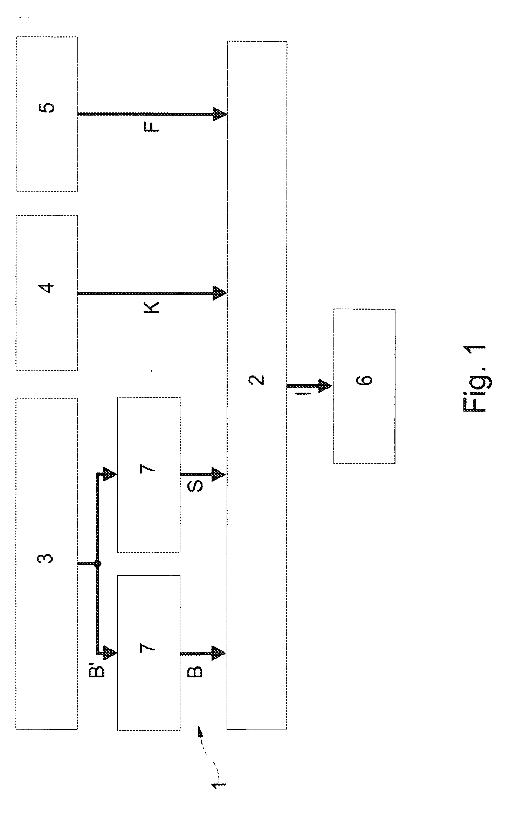

Die in Fig. 1 schematisch dargestellte erfindungsgemäße Vorrichtung 1 zur Erkennung von verkehrsrelevanten Informationen, insbesondere von Verkehrszeichen, weist ein sogenanntes Fusionsmodul 2 mit Anschlüssen an einen als Kamera ausgebildeten visuellen Sensor 3, ein Navigationssystem 4 und ein Fahrzeuginformationssystem 5 auf. Über die Anschlüsse werden von der Kamera 3 Bilddaten B, von dem Navigationssystem Kartendaten K und von dem Fahrzeuginformationssystem 5, das beispielsweise in einen Fahrzeug CAN-Bus eingebunden sein kann, Fahrzeugdaten F an das Fusionsmodul 2 übermittelt, welches aus diesen Daten die gewünschten verkehrsrelevanten Informationen I ermittelt.

Die durch das Fusionsmodul 2 ermittelten verkehrsrelevanten Informationen I, beispielsweise die derzeit gültige Höchstgeschwindigkeit, werden durch das Fusionsmodul 2 an ein Anzeigeinstrument 6 ausgegeben. Das Anzeigeinstrument 6 kann ein optisches Display sein, welches der Fahrerinformation dient. Ferner kann das Anzeigeinstrument eine Steuerschnittstelle zu einer Fahrzeugsteuerung sein, die beispielsweise auf die Geschwindigkeit des Fahrzeugs automatisch einwirkt, wenn eine über der aktuellen Höchstgeschwindigkeit liegende Fahrzeuggeschwindigkeit festgestellt wird. Allgemein kann das Anzeigeinstrument eine beliebige Einrichtung sein, welche die durch das Fusionsmodul 2 erfindungsgemäß ermittelten verkehrsrelevanten Informationen I weiterverarbeitet.

Bevor die Bilddaten B der Kamera 3 dem eigentlichen Fusionsmodul 2 zugeführt werden, findet eine vorgelagerte Aufbereitung 7 statt, in welcher die unmittelbar von der Kamera 3 stammenden Bildrohdaten B' durch einen Bilderkennungsalgorithmus zur Vorselektion möglicherweise verkehrsrelevanter Informationen I untersucht, wie durch Verfahren der klassischen Bildbearbeitung mit Kanten- /Kreisdetektion und anschließender Klassifikation, und bspw. durch Löschen nicht interessierender Bildbereiche aufbereitet werden. Die aufbereiteten Bilder werden dann als eigentliche Bilddaten B dem Fusionsmodul 2 zugeleitet. Die Bildrohdaten B' werden in einer parallelen vorgelagerten Aufbereitung 7 auch nach Statusinformationen der Kamera 3 untersucht, die als zusätzliche Kamerastatusdaten S dem Fusionsmodul 2 zugeleitet werden.

Die Bilddaten B und die Kamerastatusdaten S stellen Zwischenergebnisse eines ersten Auswertungsschrittes dar, dem die Kamerarohdaten B' der Kamera 3 unterworfen werden. Diese Vorauswertung kann sowohl in die Kamera 3 mit integriert sein als auch im Rahmen der erfindungsgemäßen Anwendung als erster Verfahrensschritt innerhalb des Fusionsmoduls 2 ausgeführt werden.

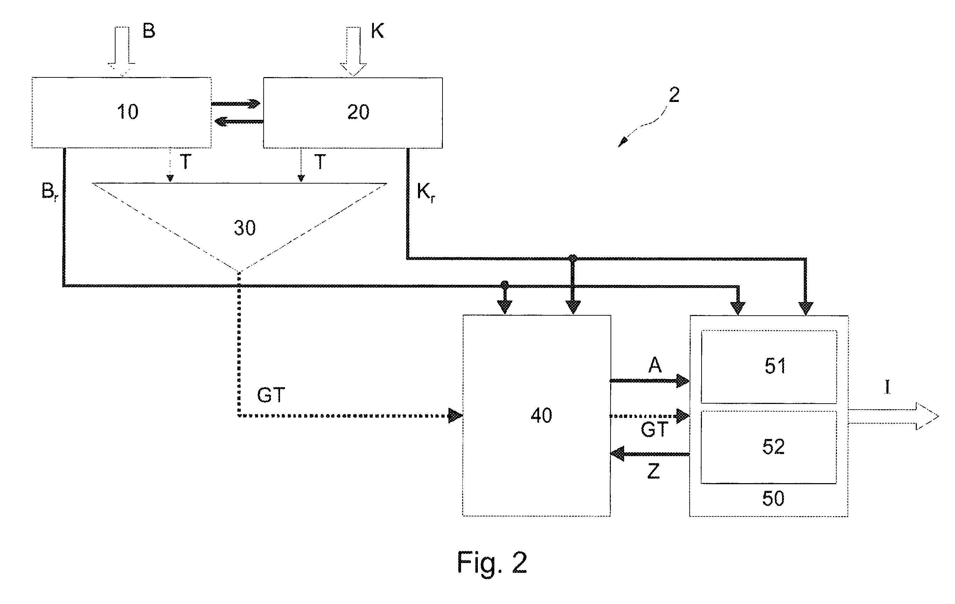

Bevor die eigentliche Funktionsweise des Fusionsmoduls 2 unter Bezug auf Fig. 2 näher erläutert wird, soll das technische Umfeld zum besseren Verständnis noch einmal beleuchtet werden.

Ziel der vorliegenden Erfindung ist es, in einem fahrenden Fahrzeug eine Möglichkeit zur Erkennung verkehrsrelevanter Informationen zu schaffen, die diese Informationen besonders zuverlässig zur Verfügung stellt. Dazu werden verschiedene, zur Verfügung stehende Rohdaten ausgenutzt, die insbesondere durch einen visuellen Sensor beziehungsweise eine Kamera 3 und ein Navigationssystem 4 als Bilddaten B und kartendaten K geliefert werden.

Derartige Systeme sind für sich genommen bereits bekannt. Werden jedoch eine kameragestützte Algorithmik beispielsweise im Rahmen der vorgeschlagenen vorgelagerten Aufbereitung 7 zur Erkennung von Verkehrszeichen oder sonstigen relevanten Informationen und die digitale Straßenkarte eines Navigationssystems 4 zur Erkennung entsprechender Verkehrszeichen in digitalen Karten jeweils für sich betrachtet, so bergen beide Systeme wesentliche Nachteile.

Bei einer kameragestützten Verkehrszeichenerkennung können beispielsweise in Abhängigkeit von Umgebungslichtbedingungen (Lichtverhältnisse) Verkehrszeichen nicht in allen Situationen zuverlässig und korrekt erkannt werden. Außerdem bestehen Unsicherheiten bei beschädigten und teilverdeckten Verkehrszeichen, wobei auch weitere Fehlerquellen für eine nicht sichere visuell-optische Erfassung von Verkehrszeichen oder ähnlichen verkehrsrelevanten Informationen vorstellbar sind.

Auch die Informationen einer digitalen Straßenkarte beinhalten einige Nachteile. So können die in der digitalen Straßenkarte als Kartendaten K enthaltenen Informationen veraltet sein. Des Weiteren sind temporäre Geschwindigkeitsregelungen beispielsweise in Baustellen und die Geschwindigkeitsinformationen von Wechselverkehrszeichen, die zunehmend zur intelligenten Verkehrsführung eingesetzt werden, in den digitalen Daten nicht verfügbar. Aus der digitalen Straßenkarte werden Informationen über die Topologie des jeweils befahrenen Straßenabschnitts (z.B. Bereich einer Ausfahrt, Bereich eines Kreisverkehrs,...) sowie ein Abbiegeereignis (Verlassen des Most Probable Paths) bereit gestellt und im Fusionsmodul verarbeitet.

Mit der Erfindung sollen die Vorteile der beiden Einzelsysteme vereint werden, sodass eine zuverlässige Information I über die aktuell zulässige Höchstgeschwindigkeit oder eine sonstige verkehrsrelevante Information bereitgestellt werden kann. Dabei soll das erfindungsgemäße System einfach in ein Fahrzeug integrierbar und auch später noch erweiterbar sein. Gleichzeitig muss eine zügige Bildbearbeitung erfolgen können, die ein Erfassen und Auswerten der verkehrsrelevanten Informationen I in Echtzeit ermöglicht.

Ein solches System wird im Rahmen des erfindungsgemäßen Fusionsmoduls 2 geschaffen, das nachfolgend näher erläutert wird.

Das Fusionsmodul 2 erhält die noch als Rohdaten vorliegenden Kartendaten K und die bereits der vorgelagerten Aufbereitung 7 unterzogenen Bilddaten B jeweils über eine externe Schnittstelle. In einer bevorzugten Ausgestaltung werden die Signale B lediglich über eine interne Schnittstelle übertragen. Über nicht dargestellte, weitere externe Schnittstellen werden ferner die Kamerastatusinformationen bzw. -daten S und die Fahrzeugdaten F eingespeist, wobei die vorgenannten externen Schnittstellen vollständig oder teilweise auch durch einen einzigen Fahrzeug-Datenbus, beispielsweise einen CAN-Bus, gebildet sein können. Die eingespeisten Informationen und Daten, die in Fig. 2 nicht näher bezeichnet sind, stehen dabei sämtlichen dargestellten Einheiten zur Verfügung.

Die Bilddaten B werden einer ersten Szeneninterpretation 10 und die Kartendaten K einer zweiten Szeneninterpretation 20 zugeführt, die anhand vorgegebener Kriterien die entscheidenden Bild- und/oder Kartendaten selektieren und auf relevante Bilddaten $B_r$ beziehungsweise Kartendaten $K_r$ verdichten. Die verdichteten Daten $B_r$ und $K_r$ sowie die gegebenenfalls zur Verfügung gestellten Kamerastatusinformationen S und Fahrzeugdaten F werden innerhalb des Fusionsmoduls 2 vorzugsweise als Datenvektoren dargestellt. Die Übertragung erfolgt über interne Schnittstellen, die eine besonders effiziente Datenübertragung ermöglichen. Die externen Schnittstellen können einem unmittelbaren Anschluss an fahrzeugeigene Sensoren, beispielsweise die Kamera 3, dienen. Ferner können die Kartendaten K der digitalen Straßenkarte und/oder Fahrzeugdaten F über einen CAN-Bus übermittelt werden. Auch die Ausgabe der erkannten, verkehrsrelevanten Informationen I an das Anzeigeinstrument 6 kann über einen CAN-Bus erfolgen.

Die relevanten Bilddaten $B_r$ und die relevanten Kartendaten $K_r$ werden ausgehend von den Mitteln zur Szeneninterpretation 10, 20 einem Regelwerk 40 und einem Zustandsautomaten 50 zugeführt. Das Regelwerk wertet die Bilddaten $B_r$ und die Kartendaten $K_r$ aus und gibt in Reaktion auf diese Auswertung eine auszuführende Aktion A an den Zustandsautomaten 50 weiter.

In dem Zustandsautomaten 50 sind definierte Zustände Z vorgegeben, die einen Zustand des fahrenden Kraftfahrzeugs und/oder der unmittelbaren Fahrzeugumgebung repräsentieren. Diese Zustände sind vorzugsweise durch im Wesentlichen objektiv messbare Größen definiert und unterscheiden sich insofern von den Angaben des Regelwerks 40, das aufbauend auf den Messdaten eine Interpretation dieser Messdaten im Sinne von auszuführenden Aktionen vornimmt. Durch diese erfindungsgemäß besonders vorteilhafte Aufteilung zwischen der Ermittlung auszuführender Aktionen in dem Regelwerk 40, das also eine straßenverkehrsordnungskonforme Interpretation der Kartendaten und der Bilddaten vornimmt, beschreibt der Zustandsautomat 50 die möglichen Zustände des Fahrzeugs und dessen Umgebung abschließend. Die verschiedenen, vorab definierten Zustände Z müssen also die gesamte Realität abbilden.

Durch diese vereinfachte Darstellung ist es insbesondere möglich, das Fusionsmodul 2 einfach in fahrende Fahrzeuge zu implementieren und mit geringem rechnerischen Aufwand aus den selektierten Daten die relevanten Informationen I zu verdichten und auszugeben. Um dem Regelwerk 40 eine umfassendere Entscheidungsgrundlage zu ermöglichen, meldet der Zustandsautomat 50 den aufgrund der relevanten Bilddaten $B_r$ und der relevanten Kartendaten $K_r$ ermittelten aktuellen Zustand Z an das Regelwerk 40 zurück.

Die durch das Regelwerk 40 vorgegebnen auszuführenden Aktionen A werden innerhalb des Zustandsautomaten 50 durch Transitionen zwischen einem Ausgangszustand und einem Zielzustand umgesetzt, wobei je nach Art der Transition der Ausgangs- und der Zielzustand gleich oder verschieden sein können. Bei dem Ausführen einer Transition und/oder dem Erreichen eines neuen Zustands wird die gewünschte relevante Information I an das Anzeigeinstrument 6 ausgegeben. Die Informationen können als Statusinformation dauerhaft ausgegeben werden. Alternativ kann eine Information des Fahrers lediglich bei einem Wechsel der Geschwindigkeitsbegrenzung erfolgen oder aber eine Warnung des Fahrers bei Überschreiten der aktuell zulässigen Höchstgeschwindigkeit.

Damit das Regelwerk 40 und der Zustandsautomat 50 nicht ständig in Betrieb sind und eine Vielzahl abzuarbeitender Programmschritte vor sich herschieben, die zu einem Daten- und Verarbeitungsstau führen, ist eine abkürzend auch als Trigger bezeichnete Trigger-Steuerung 30 vorgesehen, die von den Szeneninterpretationen 10, 20 der Bilddaten B beziehungsweise Kartendaten K ein Triggersignal T immer dann erhält, wenn eine Szeneninterpretation 10, 20 in den zugeführten Daten B, K eine relevante Information I erkannt und diese zu relevanten Bilddaten $B_r$ beziehungsweise relevanten Kartendaten $K_r$ verdichtet hat. Aufbauend auf diesem Triggersignal T erzeugt der Trigger 30 ein Gesamttriggersignal GT, das dem Regelwerk 40 und dem Zustandsautomaten 50 zugeleitet wird und deren Rechenoperationen initiiert.

Im Folgenden werden die einzelnen Komponenten des Fusionsmoduls 2 noch einmal detailliert erläutert.

Die vorzugsweise in der vorgelagerten Aufbereitung 7 bereits vorverarbeiteten Bilddaten B werden einer Szeneninterpretation 10 für die Bilddaten B zugeführt, deren Ziel es ist, verwertbare Eingangsdaten für das später genauer beschriebene Regelwerk 40 zu erhalten und die Fülle der einzelnen Bilddaten auf die relevanten Informationen zu verdichten. Dazu werden die meist noch als Pixeldaten vorliegenden Bilddaten B im Eingang der Szeneninterpretation 10 in logische Dateninformationen (relevante Bilddaten $B_r$) umgesetzt, indem die in einem Kamerabild erkannten Informationen in relevante Verkehrsinformationen übersetzt werden, die in der Szenenverarbeitung 10 definiert sind.

Die Bildverarbeitung erfolgt in der vorgelagerten Aufbereitung 7. Die Bilddaten B sind klassifizierte Verkehrszeichen mit zusätzlichen Informationen wie beispielsweise Ablage, Größe, Vertrauensmaß in die Schätzung und Güte der Bildverarbeitung.

So ist die Szeneninterpretation 10 beispielsweise auf das Erkennen bestimmter Verkehrszeichen ausgerichtet, um die derzeit gültige Höchstgeschwindigkeit zu ermitteln.

Neben der Interpretation der Einzelbilder ist es notwendig, die aufeinander folgenden Einzelbilder der Kamera 3 in eine zeitliche Abfolge zu stellen, da ein Verkehrszeichen typischerweise in einer Vielzahl von Einzelbildern vorkommt, wenn Aufnahmen aus einem fahrenden Fahrzeug aufgenommen werden. Dazu werden die zeitlich asynchron detektierten Verkehrszeichen intern getrackt, um ein in mehreren Bildern der Kamera 3 erkanntes Verkehrszeichen einer verkehrsrelevanten Information zuzuordnen. Wird ein in der Szeneninterpretation 10 getracktes Verkehrszeichen beispielsweise über einen bestimmten Zeitraum nicht mehr detektiert, kann davon ausgegangen werden, dass das Fahrzeug dieses Verkehrszeichen passiert hat und nun die durch dieses Verkehrszeichen vorgegebenen Verkehrsregeln gelten. In diesem Fall ist die zeitliche Abfolge (Tracken) dieser Szenen beendet und die Merkmale dafür, dass die Szene "abgeschlossen" ist, sind erfüllt. Die Gesamtszene wird dann in der Szeneninterpretation 10 interpretiert.

Beispielsweise kann die Szeneninterpretation 10 darauf ausgerichtet sein, Daten zur aktuell gültigen Höchstgeschwindigkeit auszuwählen. In diesem Fall bedeutet die Interpretation in der abgeschlossenen Szene konkret, dass nach vorgegebenen Kriterien die für das eigene Fahrzeug relevanten Geschwindigkeitsbegrenzungszeichen oder Aufhebungszeichen ausgewählt und irrelevante Zeichen aussortiert werden. Bei Schilderbrücken, die auf Autobahnen für jede Fahrspur beispielsweise eine eigene Geschwindigkeit vorgeben, können irrelevante Zeichen unter Verwendung der seitlichen Ablage der Zeichen aussortiert werden, sodass die relevanten Verkehrsinformationen I auf die für die eigene Fahrspur geltende Geschwindigkeitsbeschränkung verdichtet werden können. Liegt aus der digitalen Straßenkarte die Information vor, dass sich das Fahrzeug im Bereich eines Verzögerungsstreifens befindet, so können entsprechende nur auf der Seite des Streifens angeordnete Zeichen diesem Streifen zugeordnet werden. Nach Abschluss der Szeneninterpretation werden die ermittelten logischen Daten als relevante Bilddaten $B_r$ über eine interne Schnittstelle dem Regelwerk 40 und dem Zustandsautomaten 50 zur Verfügung gestellt.

Analog ist es das Ziel der Szeneninterpretation 20, die von der digitalen Straßenkarte zur Verfügung gestellten Kartendaten K auf relevante Kartendaten $K_r$ zu verdichten.

Dies ist grundsätzlich mit der vor beschriebenen Szenenverdichtung 10 für die kameragestützte Verkehrszeichenerkennung vergleichbar. Dazu werden aktuelle Karteninformationen mit Karteninformationen einer Vorschau zusammengeführt, um die relevanten Verkehrsinformationen zu verdichten, die nach Abschluss der Szeneninterpretation über eine weitere interne Schnittstelle dem Regelwerk 40 und dem Zustandsautomaten 50 zur Verfügung gestellt werden.

Die zur Verfügung gestellten relevanten Daten $B_r$ und $K_r$ werden vorzugsweise in vektorieller Form übertragen, in der jeder Vektoreintrag einer zuvor definierten Information zugeordnet ist.

Ferner erzeugen die Szeneninterpretationen 10, 20 jeweils ein Triggersignal T, sobald eine Szeneninterpretationen 10, 20 eine im Hinblick auf die zu untersuchenden Informationen relevante Veränderung der Szene im Vergleich zu einem vorherigen Zeitschritt feststellt.

Die Triggersignale T werden einem auch als Trigger-Steuerung bezeichneten Trigger 30 zugeführt, der auf Grundlage dieser Triggersignale T ein Gesamttriggersignal GT erzeugt, das dem Regelwerk 40 und vorzugsweise auch dem Zustandsautomaten 50 zugeführt wird. Bei dem Erhalt des Gesamttriggersignals GT beginnen das Regelwerk 40 und der Zustandsautomat 50 mit der Interpretation bzw. Auswertung der zur Verfügung gestellten relevanten Daten $B_r$ und $K_r$, wobei das Regelwerk 40 diese Daten nach vorgegebenen und in einer Matrix gespeicherten Regelinformationen interpretiert und der Zustandsautomat 50 aus diesen Daten einen aktuellen Zustand des Fahrzeugs und/oder dessen Umgebung auswertet.

Hierdurch wird in dem vorzugsweise als Rechenwerk aufgebauten Fusionsmodul 2 insgesamt Rechenzeit gespart, da das Regelwerk 40 und der Zustandsautomat 50 nur dann Rechenzeit beanspruchen, wenn eine Änderung der verkehrsrelevanten Informationen I vorliegt. Bis derartige Änderungen vorliegen, steht dagegen den Szeneninterpretationen 10, 20 eine erhöhte Rechenleistung zur Verfügung, um die relevanten Daten aus den Eingangsdaten schnellstmöglich zu verdichten.

Im einfachsten Fall kann der Trigger 30 durch eine ODER-Verknüpfung der beiden Einzel-Triggersignale T realisiert werden. In der dargestellten Ausführung wird das Gesamttriggersignal GT jedoch wie folgt bestimmt. Liegt das Triggersignal T einer Szeneninterpretation 10 oder 20 an, so wird ein Zähler aktiviert, der beispielsweise als Entfernungszähler und als Zeitzähler ausgebildet ist und unter Zugrundelegung der aktuellen Fahrzeuggeschwindigkeit für eine bestimmte Entfernung weiterzählt. Dieser Zähler integriert also die aktuelle Fahrzeuggeschwindigkeit. Liegt vor Ablauf einer vordefinierten maximalen Entfernung das zweite Triggersignal T der anderen Szeneninterpretation 20 oder 10 an, so wird das Gesamttriggersignal GT umgehend aktiviert. Kommt es bis zum Ablauf der maximalen Entfernung des Entfernungszählers nicht zu einer Aktivierung des zweiten Triggersignals T, so wird das Gesamttriggersignal GT mit Ablauf des Zähler beziehungsweise der maximalen Entfernung gesetzt. Dies zeigt an, dass lediglich eine der beiden Szeneninterpretationen 10, 20 eine verkehrsrelevante Information identifizieren konnte.

Mithilfe der Steuerung durch den Trigger 30 können somit zeitliche Asynchronitäten abgefangen werden, die häufig dadurch entstehen, das Verkehrszeichen und deren Ort in den digitalen Karteninformationen häufig nicht identisch zusammenfallen.

Bei Anliegen des Gesamttriggersignals GT wird basierend auf den relevanten Daten $B_r$ und $K_r$ der Szeneninterpretationen 10, 20 ein Regelwerk 40 ausgewertet, das die in den relevanten Daten $B_r$ und $K_r$ enthaltenden Informationen entsprechend den geltenden Verkehrsregeln auswertet. Diese auszuführenden Aktionen A werden in dem Zustandsautomaten 50 in Transitionen umgerechnet, mit denen in dem Zustandsautomaten 50 von einem ersten in einen zweiten Zustand gewechselt wird, der mit dem ersten Zustand auch identisch sein kann. Das Regelwerk 40 kann länderspezifisch ausgeführt sein, um die verschiedenen Verkehrsregeln in unterschiedlichen Staaten berücksichtigen zu können. Die vorgeschlagene Struktur des Regelwerks 40 ermöglicht es auch, flexibel Änderungen in den Verkehrsregeln (beispielsweise aufgrund von Gesetzesänderungen) zu implementieren.

Mit Hilfe des Zustandsautomaten 50 werden verschiedene mögliche Systemzustände des fahrenden Kraftfahrzeugs und/oder der Fahrzeugumgebung abgebildet. Hierbei sieht der Zustandsautomat 50 eine Hauptzustandsmaschine 51 vor, die das Ausgangsverhalten des Fusionsmoduls 2 bestimmt und im Wesentlichen die auszugebenden Informationen I vorgibt. Die Hauptzustandsmaschine 51 kann beispielsweise im Wesentlichen die dem fahrenden Fahrzeug zugeordneten Zustände hinsichtlich der aktuell zulässigen Höchstgeschwindigkeit abbilden.

Die Abbildung besonderer Umgebungsbedingungen, wie beispielsweise eine Baustellen- oder eine Wechselverkehrszeichen-Strecke, ist durch eine oder mehrere Umgebungszustandsmaschinen 52 möglich. Hierdurch lassen sich die Ergebnisse der Erkennung verkehrsrelevanter Informationen I insgesamt verbessern und die Berechnung der benötigten Informationen beschleunigen. In Abhängigkeit der auszuführenden Aktionen A des Regelwerks 40 werden zwischen dem in dem Zustandsautomaten 50 beziehungsweise der Hauptzustandsmaschine 51 und/oder den Umgebungszustandsmaschinen 52 Transitionen zwischen den Zuständen vorgenommen, wobei die Ausgabe der verkehrsrelevanten Informationen I an die Transition oder das Erreichen eines neuen Zustands gekoppelt werden kann. In beiden Fällen wird also eine dem Zustand zugeordnete Information I ausgegeben.

Die Fahrzeugdaten F, welche insbesondere auch die aktuelle Geschwindigkeit des Fahrzeugs über Telematiksysteme oder über eine Schnittstelle Kamerasystem Navigationssystem empfangene Informationen anderer Fahrzeuge oder Barken in der Umgebung des Fahrzeugs umfassen, gehen als zusätzliche Informationen in die im Fusionsmodul 2 vorgenommene Auswertung mit ein und können vorzugsweise auch in Vektorform vorliegen. Begrenzungstypen werden hierdurch anpassbar gemacht und können als beschränkend, unbeschränkend oder veränderbar ausgestaltet werden.

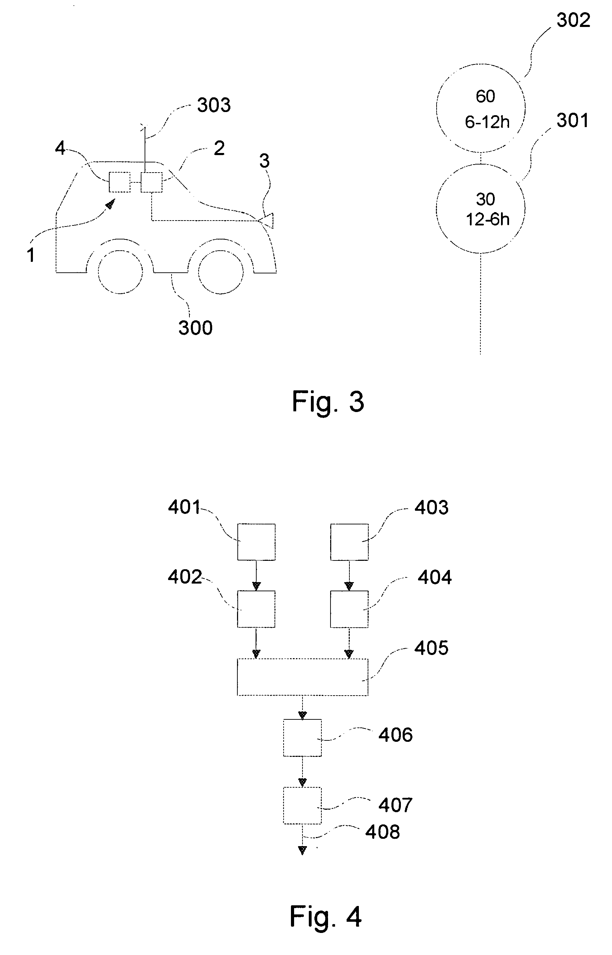

Fig. 3 zeigt eine schematische Darstellung eines Fahrzeugs mit einem System für die Erkennung von verkehrsrelevanten Informationen gemäß einem Ausführungsbeispiel der Erfindung. Am vorderen Bereich des Fahrzeugs 300 ist ein visueller Sensor 3 angebracht, der über eine Datenleitung mit dem Fusionsmodul 2 verbunden ist. Weiterhin ist ein Navigationssystem 4 vorgesehen. Entsprechende Satellitensignale können über die Antenne 303 empfangen werden. Die übrigen Komponenten des Systems sind zur besseren Übersicht nicht abgebildet.

Vor dem Fahrzeug befindet sich eine Doppelbeschilderung 301, 302. Das Schild 301 zeigt eine Geschwindigkeitsbegrenzung von 30 Kilometer pro Stunde zwischen 12 Uhr und 6 Uhr. Das Schild 302 hingegen zeigt eine Geschwindigkeitsbegrenzung von 60 Kilometer pro Stunde zwischen 6 Uhr und 12 Uhr.

Das System ist selbstständig in der Lage, das aktuell gültige Schild auszuwählen und ggf. die Geschwindigkeit des Fahrzeugs aktiv zu beschränken oder die aktuelle Geschwindigkeitsbeschränkung auch einfach nur anzuzeigen.

Auch kann die Auswahl getroffen werden, indem die entsprechenden Beschränkungen zusammen mit den Zusatzzeichen oder Gültigkeitsinformationen in der Karte vorhanden sind. In diesem Fall ist keine Erkennung der Zusatzzeichen mit Hilfe der Kamera nötig.

Fig. 4 zeigt ein Flussdiagramm eines Verfahrens gemäß einem Ausführungsbeispiel der Erfindung. In Schritt 401 erfolgt eine Detektion von Bilddaten durch eine Kamera. In Schritt 402 werden diese Bilddaten einer ersten Szeneninterpretation unterzogen, um die Daten nach relevanten Verkehrsinformationen zu durchsuchen und entsprechend zu verdichten. Parallel dazu oder zeitlich versetzt werden Kartendaten in Schritt 403 geladen und in Schritt 404 in einer zweiten Szeneninterpretation nach enthaltenen verkehrsrelevanten Informationen durchsucht und verdichtet.

Die entsprechenden Ergebnisse werden dann in Schritt 405 einem Regelwerk zugeführt, welches die Bilddaten und die Kartendaten auswertet. Ein entsprechendes Ausgabesignal wird dann vom Regelwerk an einen Zustandsautomaten übergeben (Schritt 406). Der Zustandsautomat führt in Schritt 407 eine Transition in seinem Zustandsraum durch, welche auf dem Ausgabesignal des Regelwerks basiert.

Daraufhin gibt der Zustandsautomat eine entsprechende Information aus (408).

Diese Information kann beispielsweise zum Anzeigen einer Geschwindigkeitsbegrenzung eingesetzt werden. Auch kann diese Information zum Steuern des Fahrerassistenzsystems eingesetzt werden.

Im Folgenden werden zwei weitere Ausführungsbeispiele der Erfindung beschrieben.

Das erste Ausführungsbeispiel betrifft die Implementierung des Regelwerks des Fusionsmoduls. Das zweite Ausführungsbeispiel betrifft ein verfahren zur Behandlung paralleler Geschwindigkeitsbegrenzungen in dem Fusionsmodul zur Nutzung der aktuell gültigen Höchstgeschwindigkeit.

Erstes Ausführungsbeispiel:

In dem Fusionsmodul werden Informationen aus einer digitalen Straßenkarte und Informationen von einer kameragestützten Verkehrszeichenerkennung zusammengeführt, um den Fahrer über die zulässige Höchstgeschwindigkeit zu informieren. Des Weiteren kann die aktuell gültige Geschwindigkeitsbegrenzung als Eingangsgröße für die Geschwindigkeitsregelanlage verwendet werden. Auch sind Anwendungen aus dem Bereich des autonomen Fahrens möglich.

Um auch im Falle widersprüchlicher Situationen aus den Eingangsdaten ein eindeutiges Ergebnis ausgeben zu können, erhält das Fusionsmodul ein Regelwerk. Auf Basis vorverarbeiteter Eingangsdaten der beiden Informationsquellen (optische Sensorik und digitale Karte) wird eine Entscheidung getroffen. Hierzu wird das Regelwerk verwendet (siehe Fig. 2).

Grundfunktionalität: Bei der Detektion eines Verkehrszeichens oder der Änderung eines Signals von der digitalen Straßenkarte wird basierend auf den Ausgangsdaten der Datenverdichtung bzw. der Szeneninterpretation das Regelwerk ausgewertet. Ausgang dieses Regelwerks sind durchzuführende Aktionen, die in den jeweiligen Zustandsautomaten auf Transitionen abgebildet werden. Sowohl die Vorverarbeitungsblöcke als auch das Regelwerk können länderspezifisch ausgeführt werden, um auf die Besonderheiten unterschiedlicher Länder eingehen zu können. Zur Beschreibung des Regelwerks wird eine spezielle Struktur in Form zweier Matrizen verwendet, deren Inhalte durch einen Algorithmus interpretiert werden.

Umsetzung des Regelwerks: Eingangs- und Ausgangssignale werden jeweils in einem Vektor zusammengefasst. Die Beschreibung des Regelwerks erfolgt in Form einer Matrix. Jede Zeile dieser Matrix stellt eine Regel dar. In einer zweiten Matrix sind zeilenweise die zu einer jeden Regel gehörenden Ausgangswerte abgelegt. Bei Ausführung des Regelwerks (ausgelöst durch das Trigger-Signal GT in Fig. 2) wird ein Algorithmus ausgeführt, der Zeile für Zeile prüft, ob eine Regel erfüllt ist. Ist dies der Fall, wird die Auswertung gestoppt. Die Ausgangssignale werden mit den zu der als wahr ausgewerteten Regel gehörenden Ausgangswerten befüllt. Die entsprechende Funktion ist als Software-Modul beispielsweise in der Programmiersprache C umgesetzt.

Die Anzahl der Eingangssignale ist flexibel und kann mit Hilfe eines Parameters festgelegt werden (beispielsweise 25 Eingangssignale). Beispielsweise werden die Eingangssignale als in1, in2, in3, ..., bezeichnet.

Auch die Anzahl der Ausgangssignale ist variabel und kann mit Hilfe eines Parameters vorgegeben werden (beispielsweise fünf Ausgangssignale). Die Ausgangssignale werden beispielsweise als ou1, ou2, ou3, ..., bezeichnet.

Auch die Anzahl der Regeln ist variabel und kann mit Hilfe eines Parameters vorgegeben werden (beispielsweise 200 Regeln). Eine Regel besteht aus "Sub-Regeln" (beispielsweise zehn "Sub-Regeln"). Beispiele für "Sub-Regeln" sind:

```
IF(in1<in2)
```

```
IF(in1 = = konst)
```

```
IF(in1 - in5≤konst)
```

Jede "Sub-Regel" besteht aus fünf Komponenten (Spalten in der Regelmatrix):

Komponente 1: Eingangssignal #1
Komponente 2: Operator #1
Komponente 3: Eingangssignal #2
Komponente 4: Operator #2
Komponente 5: Konstante

Einzelne Komponenten einer Regel können "leer" sein, was in der Regel der Füllung mit dem Wert "0" entspricht. Alle "Sub-Regeln" sind mit einem logischen UND verknüpft. Sobald bei Durchlaufen des Regelwerks eine Regel als WAHR ausgewertet wird, werden die zu der jeweiligen Regel in der Ausgangsmatrix enthaltenen Ausgangswerte den Ausgangssignalen zugeordnet.

Im Folgenden sind verschiedene Operatoren des Regelwerks mit ihrer entsprechenden Bedeutung dargestellt:

= = gleich wie
!=: nicht gleich wie
>: größer als
<: kleiner als
>=: größer oder gleich als
<=: kleiner oder gleich als
+: Addition
-: Subtraktion

Pflege des Regelwerks:

Das Regelwerk kann mit Hilfe eines Werkzeuges (Tools) erstellt und gewartet werden. Beispielsweise kann hierfür ein Tabellenverarbeitungsprogramm verwendet werden, aus dem mittels eines Makros (basierend beispielsweise auf der Programmiersprache Visual Basic) sowohl Regel- als auch Ausgangsmatrizen exportiert werden können. Mit Hilfe eines Algorithmus wird während der Laufzeit geprüft, ob Regel- und Ausgangsmatrix gültig sind.

Die Verwendung eines komplexeren Werkzeugs, das auch eine grafische Oberfläche zur Entwicklung und Wartung des Regelwerks bereitstellt, ist ebenfalls möglich.

Die folgende Tabelle 1 zeigt ein Beispiel für eine Regelmatrix.

Tabelle 1

| Sub-rule 1 | | | | | sub-rule 2 | | | | | s-r 3 | Rule# |
|---|---|---|---|---|---|---|---|---|---|---|---|
| in1 | Op | in2 | op | const | in1 | op | in3 | op | const | ... | R1 |
| in1 | Op | 0 | 0 | const | in4 | op | in5 | 0 | 0 | 0 | R2 |
| 1 | 4 | 2 | 0 | 0 | 1 | 8 | 5 | 6 | 27 | 0 | R3 |
| ... | ... | ... | ... | ... | ... | ... | ... | ... | ... | ... | ... |

Hierbei entspricht die Regel 3 der Abfrage ((in1<in2)&&(in1-in5)≤27))

Die nachfolgende Tabelle 2 zeigt ein Beispiel für die Ausgangsmatrix:

Tabelle 2

| rule# | ou1 | ou2 | ou3 | ou4 | ou5 |
|-------|-----|-----|-----|-----|-----|
| R1 | 1 | 3 | 0 | 0 | 0 |
| R2 | 2 | 4 | 3 | 3 | 3 |
| R3 | 3 | 3 | 7 | 1 | 2 |
| ... | ... | ... | ... | ... | ... |
| default | 0 | 0 | 0 | 0 | 0 |

Das oben beschriebene Regelwerk dient zur Implementierung der Entscheidungslogik für das Fusionsmodul. Durch die Struktur des Fusionsmoduls und den modularen Aufbau des Gesamtsystems ergeben sich überschaubare Einheiten, die beliebig komplett ausgebaut werden können. Hierzu wurde ein transparentes, leicht anzupassendes Regelwerk gewählt. Auf diese Weise kann eine einfache Anpassung an unterschiedliche Ländervarianten oder zukünftig neu hinzukommende Eingangssignale ermöglicht werden. Da die eigentliche Entscheidungslogik in Form des Regelwerks abgelegt ist, werden nur noch Zustandsautomaten mit geringer Komplexität benötigt.

Beschreibung des zweiten Ausführungsbeispiels:

Grundfunktionalität: Auf zahlreichen Straßenabschnitten, beispielsweise auf Autobahnen oder autobahnähnlich ausgebauten Bundesstraßen, sind parallel aufgestellte Geschwindigkeitsbegrenzungen (im Folgenden auch als Mehrfachbeschilderungen bezeichnet) zu finden. Sofern diese als solche eindeutig erkannt werden, können die voneinander abweichenden Begrenzungen intern verarbeitet werden. Als Mehrfachbeschilderung könnte somit beispielsweise eine Parallelbeschilderung "120 ohne Einschränkung" und "80 bei Nässe" auftreten. In den meisten Fällen sind diese Zeichen übereinander an einem Pfosten angebracht. Nicht als Mehrfachbeschilderung werden Geschwindigkeitsbegrenzungen mit fahrstreifenbezogener Gültigkeit, wie dies beispielsweise bei einer Schildergruppe der Fall ist, verstanden. Kann bei zwei detektierten Geschwindigkeitsbegrenzungen mit unterschiedlichen Werten nicht eindeutig davon ausgegangen werden, dass es sich um eine Mehrfachbeschilderung handelt, so entscheidet das Fusionsmodul eindeutig für eine Begrenzung.

Erkennung von Mehrfachbeschilderungen:

Mehrfachbeschilderungen können sowohl basierend auf den Daten, die der Algorithmus zur Detektion und Klassifikation von Verkehrszeichen liefert, erkannt werden, als auch basierend auf den in der digitalen Straßenkarte enthaltenen Informationen. Wenn bei den zuerst genannten Eingangsdaten derzeit noch keine Zusatzzeichen detektiert und klassifiziert werden, ist eine Erkennung von Mehrfachbeschilderungen nur durch die Lage der Zeichen zueinander möglich. Dies geschieht im Rahmen der "Szeneninterpretion" der Eingangsdaten von der Kamera. Im Umkehrschluss kann mit hoher Wahrscheinlichkeit davon ausgegangen werden, dass es sich bei zwei Zeichen direkt übereinander in den meisten Fällen um eine Mehrfachbeschilderung handelt. Sind Mehrfachbeschilderungen in der digitalen Straßenkarte hinterlegt, so ist auch die Art der Einschränkung (beispielsweise bei Messe, zu bestimmten Zeiten, an bestimmten Tagen, für bestimmte Fahrzeugtypen, wie Lkw) bekannt.

Anhand dieser Ausführungen wird deutlich, dass sich die Eingangsdaten bei Einfach- und Mehrfachbeschilderungen für das Fusionsmodul nicht wesentlich unterscheiden. Zusätzlich zu den reinen Geschwindigkeitsbegrenzungen wird bei über die Bildverarbeitung erkannten Mehrfachbeschilderungen noch eine entsprechende Information an Regelwerk und Zustandsmaschinen weitergegeben. Bei Mehrfachbeschilderungen oder bei eingeschränkt gültigen Einzelbeschilderungen, die in der digitalen Straßenkarte hinterlegt sind, wird die Information über die Art der Einschränkung übertragen.

Die Verarbeitung von Geschwindigkeitsbegrenzungen mit eingeschränkter Gültigkeit erfolgt wie folgt: Sofern aus der digitalen Straßenkarte bekannt ist, dass eine Geschwindigkeitsbegrenzung eingeschränkt Gültigkeit hat, kann diese Zusatzinformation einem von der Bildverarbeitung detektierten Zeichen zugeordnet werden. Der Fahrer kann somit über die Art der Einschränkung informiert werden. Geschwindigkeitsbegrenzungen, die beispielsweise für einen bestimmten Fahrzeugtypen nicht gültig sind (beispielsweise Geschwindigkeitsbegrenzungen für Lkw) oder die zur aktuellen Zeit nicht gültig sind, können auf diese Weise ausgeblendet werden. Sofern die Information über die Gültigkeit einer Geschwindigkeitsbegrenzung von dem Bildverarbeitungsmodul geliefert werden kann, erfolgt direkt eine Zuordnung.

Die Verarbeitung von Mehrfachbeschilderungen erfolgt wie folgt: Bei Mehrfachbeschilderungen von der digitalen Straßenkarte oder von der Algorithmik zur Detektion und Klassifikation von Verkehrszeichen im Kamerabild wird das beschriebene Regelwerk mehrfach ausgewertet. Hierbei werden von einer Logikeinheit jeweils unterschiedliche Eingangsdaten vorgegeben. Das Ergebnis einer jeden Regelwerkauswertung wird der zur Interpretation von Mehrfachbeschilderungen verwendeten parallelen Zustandsmaschine zugeführt. Hierbei wird für jede zu interpretierende Geschwindigkeitsbegrenzung eine Zustandsmaschine verwendet. Auf diese Weise wird es möglich, überschaubare und wartbare Regelwerke zu verwenden. Eine weitere Möglichkeit ist der Verzicht auf die Logikeinheit zur Vorgabe der Eingangsdaten für eine serielle Regelwerkauswertung und die Verwendung eines umfassenden Regelwerks, das die parallelen Zustandsmaschinen ansteuert.

Als weitere Ausführungsform kann ein umfassendes Regelwerk verwendet werden, mit dem alle Geschwindigkeitsbegrenzungen mit einem Regelwerkdurchlauf abgearbeitet werden können. Dies hat allerdings den Nachteil, dass das Regelwerk aufgrund der zusätzlichen Eingänge entsprechend umfangreich und schlecht wartbar wird.

Wie bereits oben beschrieben, können dem Fahrer entweder alle Geschwindigkeitsbegrenzungen mit einer ggf. existierenden Gültigkeitsinformation übergeben werden, oder aber nur für ihn relevante Begrenzungen. Des weiteren ist es möglich, eine Selektion hinsichtlich der anzuzeigenden Begrenzungen zu treffen und beispielsweise nur die Begrenzung mit dem höchsten und die mit dem niedrigsten Wert auszugeben.

Das Fusionsmodul zur Fusionierung der Daten einer kameragestützten Verkehrszeichenerkennung und einer digitalen Straßenkarte für ein Fahrerassistenzsystem zur Ermittlung der aktuell gültigen zulässigen Höchstgeschwindigkeit kann parallel existierende Geschwindigkeitsbegrenzungen mit unterschiedlichen Gültigkeiten verarbeiten.

Durch die beschriebene Struktur ergibt sich ein überschaubares und leicht wartbares System. Mehrfachbeschilderungen können verarbeitet und je nach Kundenwunsch bzw. je nach verfolgter Strategie hinsichtlich der Mensch-Maschine-Schnittstelle zur Information des Fahrers ausgegeben werden.

Das System ist flexibel einsetzbar und wartungsfreundlich. Um das Regelwerk klein zu halten, können mehrere Zustandsmaschinen vorgesehen sein, die parallel einsetzbar sind. In diesem Falle kann das Regelwerk mehrmals hintereinander ausgeführt werden, jedes mal mit anderen Eingangsvektoren (Eingangsdaten).

Mit der Erfindung ist es also möglich, die Vorteile der beiden Einzelsysteme "kameragestützte Verkehrszeichenerkennung" und "digitale Straßenkarte" zu vereinigen. Durch das Fusionsmodul 2 beziehungsweise das darin ablaufende Verfahren ist es möglich, dem Fahrer eine Information über verkehrsrelevante Informationen und insbesondere die aktuell zulässige Höchstgeschwindigkeit auch bei widrigen Umgebungsbedingungen zu geben, auch wenn lediglich temporäre Geschwindigkeitsbeschränkungen oder durch Wechselverkehrszeichen dargestellte Informationen vorliegen.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

**Bezugszeichenliste:**

| | |
|---|---|
| 1 | Vorrichtung zur Erkennung verkehrsrelevanter Informationen |
| 2 | Fusionsmodul |
| 3 | visueller Sensor, Kamera |
| 4 | Navigationssystem |
| 5 | Fahrzeuginformationssystem, CAN-Bus |
| 6 | Anzeigeinstrument |
| 7 | vorgelagerte Aufbereitung |
| 10 | Szeneninterpretation Bilddaten |
| 20 | Szeneninterpretation Kartendaten |
| 30 | Trigger-Steuerung, Trigger |
| 40 | Regelwerk |
| 50 | Zustandsautomat |
| 51 | Hauptzustandsmaschine |

(fortgesetzt)

| 52 | Umgebungszustandsmaschine |
|---|---|
| 300 | Fahrzeug |
| 301 | erstes Schild |
| 302 | zweites Schild |
| 303 | Antenne |
| 401-407 | Verfahrensschritte |
| B | Bilddaten (detektierte und klassifizierte Verkehrszeichen) |
| B' | Bildrohdaten |
| $B_r$ | relevante Bilddaten |
| S | Kamerastatusinformationen bzw. -daten |
| K | Kartendaten |
| $K_r$ | relevante Kartendaten |
| T | Triggersignal |
| GT | Gesamttriggersignal |
| F | Fahrzeugdaten |
| I | verkehrrelevanten Informationen, Höchstgeschwindigkeit |
| A | auszuführende Aktion |
| Z | Zustände |

**Patentansprüche**

1. Verfahren zur Erkennung von verkehrsrelevanten Informationen (I) in einem fahrenden Fahrzeug, bei dem Bilddaten (B) eines visuellen Sensors (3) und Kartendaten (K) eines Navigationssystems (4) zur Erkennung interpretiert werden, wobei

- die Bilddaten (B) in einer ersten Szeneninterpretation (10) nach enthaltenen verkehrsrelevanten Informationen (I) durchsucht und auf relevante Bilddaten ($B_r$) verdichtet werden,
- die Kartendaten (K) in einer zweiten Szeneninterpretation (20) nach enthaltenen verkehrsrelevanten Informationen (I) durchsucht und auf relevante Kartendaten ($K_r$) verdichtet werden, **dadurch gekennzeichnet, dass**
- die relevanten Bilddaten ($B_r$) und die relevanten Kartendaten ($K_r$) einem Regelwerk (40) und mindestens einem Zustandsautomaten (50) zur Interpretation der Bild- und Kartendaten zugeführt werden,
- wobei das Regelwerk (40) eine straßenverkehrsordnungskonforme Auflösung widersprüchlicher Situationen in den relevanten Bilddaten ($B_r$) und den relevanten Kartendaten ($K_r$) ermöglicht und eine auszuführende Aktion (A) an den mindestens einen Zustandsautomaten (50) weitergibt,
- wobei der mindestens eine Zustandsautomat (50) aufgrund der ihm durch das Regelwerk (40) vorgegebenen, auszuführenden Aktion (A) eine Transition in seinem Zustandsraum, bei dem ausgehend von einem Anfangszustand in einen neuen oder gegebenenfalls wieder denselben Endzustand gewechselt wird, mit vordefinierten Zuständen (Z), die Eigenschaften des fahrenden Fahrzeugs und gegebenenfalls der Umgebung losgelöst von einer straßenverkehrsordnungskonformen Interpretation des Zustands anhand der Erkennung von verkehrsrelevanten Informationen charakterisieren, durchführt und eine der Transition oder dem durch die Transition erreichten Zustand (Z) zugeordnete verkehrsrelevante Information (I) ausgibt, - wobei der Zustandsautomat (50) seinen aktuellen Zustand (Z) an das Regelwerk (40) zurückmeldet, damit das Regelwerk (40) bei der Interpretation der relevanten Bild- oder Kartendaten ($B_r$, $K_r$) auch den Zustand (Z) des Fahrzeugs und/oder der Umgebung mit berücksichtigen kann.
- und wobei sofern aus den relevanten Bild- und Kartendaten ($B_r$, $K_r$) parallel aufgestellte Geschwindigkeitsbegrenzungen, welche keine fahrstreifenbezogene Gültigkeit haben, erkannt werden, das Regelwerk (40) mehrfach ausgewertet und das Ergebnis einer jeden Regelwerkauswertung einem zur Interpretation der parallel aufgestellten Geschwindigkeitsbegrenzungen verwendeten parallelen Zustandsautomaten (50) zugeführ wird, indem hierbei für jeder zu interpretierende Geschwindigkeitsbegrenzung ein Zustandsautomat (50) verwendet wird.

2. Verfahren nach Anspruch 1,
wobei in dem Regelwerk (40) die inhaltliche Interpretation der relevanten Bild- und Kartendaten ($B_r$, $K_r$) anhand

spezifischer Regelsätze erfolgt und die durch das Regelwerk (40) vorgegebene Aktion (A) ein aufgrund einer erkannten Regel einzuhaltendes Verhalten parametrisiert.

3. Verfahren nach Anspruch 1 oder 2,
wobei der Zustandsautomat (50) die der Transition oder dem durch die Transition erreichten Zustand zugeordnete Information (I) in einem Display oder an eine Fahrzeugsteuerung ausgibt.

4. Verfahren nach einem der vorhergehenden Ansprüche,
wobei der Zustandsautomat (50) in eine Hauptzustandsmaschine (51), welche den Zustand (Z) des Fahrzeug charakterisierende Informationen verarbeitet und eine oder mehrere Umgebungszustandsmaschinen (52), die veränderliche Umgebungsbedingungen des Fahrzeugs abbilden, aufgeteilt wird.

5. Verfahren nach einem der vorhergehenden Ansprüche,
wobei die erste Szeneninterpretation (10) und die zweite Szeneninterpretation (20) bei dem Verdichten auf relevante Bild- oder Kartendaten ($B_r$, $K_r$) ein Triggersignal (T) an eine Trigger-Steuerung (30) senden, welche ein Gesamttriggersignal (GT) für das Regelwerk (40) und den Zustandsautomaten (50) erzeugt, wobei das Gesamttriggersignal (GT) bewirkt, dass das Regelwerk (40) und der Zustandsautomat (50) die an ihren internen Eingängen anliegenden relevanten Bild- und Kartendaten ($B_r$, $K_r$) verarbeiten.

6. Verfahren nach Anspruch 5, wobei die Trigger-Steuerung (30) eine ODER-Verknüpfung der beiden Triggersignale (T) der ersten und zweiten Szeneninterpretation (10, 20) zur Erzeugung des Gesamttriggersignals (GT) aufweist.

7. Verfahren nach Anspruch 6, wobei die ODER-Verknüpfung eine verzögerte ODER-Verknüpfung ist.

8. Verfahren nach Anspruch 6, wobei die Trigger-Steuerung (30) bei Anliegen eines ersten Triggersignals (T) von der ersten oder der zweiten Szeneninterpretation (10, 20) einen Zahler aktiviert und entweder bei Erreichen eines maximalen zählerwerts oder bei Anliegen des zweiten Triggersignals (T) das Gesamttriggersignal (GT) erzeugt.

9. Verfahren nach einem der vorhergehenden Ansprüche, wobei in der ersten Szeneninterpretation (10) und/oder der zweiten Szeneninterpretation (20) anhand vorgegebener Kriterien relevante Bild- und/oder Kartendaten ($B_r$, $K_r$) selektiert werden, indem zu verschiedenen Zeitpunkten erfasste relevante Bild- und/oder Kartendaten ($B_r$, $K_r$) in einen zeitlichen Zusammenhang gestellt werden und/oder eine örtliche Auswahl relevanter Bilddaten ($B_r$) getroffen wird.

10. Verfahren nach einem der vorhergehenden Ansprüche, wobei die erste Szeneninterpretation (10) und die zweite Szeneninterpretation (20) Informationen austauschen.

11. Verfahren nach einem der vorhergehenden Ansprüche, wobei Fahrzeugdaten (F) und/oder Kamerastatusdaten (S) bei dem Erkennen verkehrsrelevanter Informationen (I) zur Verfügung stehen.

12. Vorrichtung zur Erkennung von verkehrsrelevanten Informationen (I) in einem fahrenden Fahrzeug mit einem Anschluss an ein System eines visuellen Sensors (3) zum Erhalten von Bilddaten (B, B'), einem Anschluss an ein Navigationssystem (4) zum Erhalten von Kartendaten (K) und einem Anschluss an ein Anzeigeinstrument (6) zum Darstellen bzw. verarbeiten der Ergebnisse der Erkennung, welche insbesondere zur Durchführung des Verfahrens nach einem der Ansprüche 1 bis 11 eingerichtet ist, **dadurch gekennzeichnet, dass**

- Mittel zur Szeneninterpretation (10, 20) zur Verdichtung der erhaltenen Bilddaten (B) des visuellen Sensors (3) und der Kartendaten (K) des Navigationssystems (4) auf relevante Bild- und Kartendaten ($B_r$, $K_r$) und zur Weiterleitung der relevanten Bild- und Kartendaten ($B_r$, $K_r$) an eine Recheneinheit mit mindestens einem Zustandsautomaten (50) und mit einem Regelwerk (40) vorgesehen sind,
- das Regelwerk (40) dazu eingerichtet ist, eine straßenverkehrsordnungskonforme Auflösung widersprüchlicher Situationen in den relevanten Bild- und Kartendaten ($B_r$, $K_r$) zu ermöglichen und ein korrespondierendes Ausgabesignal auszugeben und eine auszuführende Aktion (A) an den mindestens einen Zustandsautomaten (50) weiterzugeben,
- der mindestens eine Zustandsautomat (50) dazu eingerichtet ist, aufgrund der ihm durch das Regelwerk vorgegebenen auszuführenden Aktion (A) eine Transition in seinem Zustandsraum mit vordefinierten Zuständen (Z), die Eigenschaften des fahrenden Kraftfahrzeuges und gegebenenfalls der Umgebung losgelöst von einer straßenverkehrsordnungskonformen Interpretation des Zustands anhand der Erkennung von verkehrsrelevanten Informationen charakterisieren, durchzuführen, bei der ausgehend von dem Anfangszustand in einen neuen oder gegebenenfalls wieder denselben Endzustand gewechselt wird und eine der Transition oder dem durch die Transition neu erreichten Zustand zugeordnete verkehrsrelevante Information (I) über den Anschluss an ein Anzeigeinstrument (6) auszugeben und der Zustandsautomat (50) dazu eingerichtet ist, seinen aktuellen Zustand (Z) an das Regelwerk (40) zurückzumelden, damit das Regelwerk (40) bei der Interpretation der relevanten Bild- oder Kartendaten ($B_r$, $K_r$) auch den Zustand (Z) des Fahrzeugs und/oder der Umgebung mit berücksichtigen kann und

- eine Logikeinheit derart ausgebildet ist, dass sie sofern sie aus den relevanten Bild- und Kartendaten ($B_r$, $K_r$) parallel aufgestellte Geschwindigkeitsbegrenzungen, welche keine fahrstreifenbezogene Gültigkeit haben, erkennt, eine mehrfache Auswertung des Regelwerks (40) bewirkt und das Ergebnis einer jeden Regelwerkauswertung einem zur Interpretation der parallel aufgestellten Geschwindigkeitsbegrenzungen verwendeten parallelen zustandsautomaten (50) zuführt, indem sie hierbei für jede interpretierende Geschwindigkeitsbegrenzung einen Zustandsautomat (50) verwendet.

**13.** Vorrichtung nach Anspruch 12,
wobei den Mitteln zur ersten Szeneninterpretation (10) und zweiten Szeneninterpretation (20) eine Trigger-Steuerung (30) zur Erzeugung eines Gesamttriggersignals (GT) nachgeschaltet ist.

**14.** Vorrichtung nach Anspruch 12 oder 13, wobei die Vorrichtung eine Geschwindigkeitsbegrenzungs-Assistenz bereitstellt.

**Claims**

**1.** A method for detecting traffic-relevant information (I) in a moving vehicle, in which image data (B) from a visual sensor (3) and map data (K) from a navigation system (4) are interpreted for detection purposes, wherein

- the image data (B) is scanned in a first scene interpretation (10) for any traffic-relevant information (I) it may contain, and is compressed to relevant image data ($B_r$),
- the map data (K) is scanned in a second scene interpretation (20) for any traffic-relevant information (I) it may contain and is compressed to relevant map data ($K_r$),

**characterized in that**

- the relevant image data ($B_r$) and the relevant map data ($K_r$) is fed to a control facility (40) and at least one finite automaton (50) for the purpose of interpreting the image and map data,
- wherein the control facility (40) enables a resolution which conforms to the road traffic rules of contradictory situations in the relevant image data ($B_r$) and the relevant map data ($K_r$) and forwards an action (A) to be executed to the at least one finite automaton (50),
- wherein the at least one finite automaton (50), due to the action (A) to be executed specified to it by the control facility (40), implements a transition in its state space in which, starting from an initial state, a shift is made into a new end state or, if appropriate, back into the same end state, using pre-defined states (Z) which characterise properties of the moving vehicle and, if appropriate, of the environment in a manner which is unrelated to an interpretation which conforms to the road traffic rules of the state on the basis of the detection of traffic-relevant information, and outputs traffic-relevant information (I) which is allocated to the transition or to the state (Z) achieved by the transition,
- wherein the finite automaton (50) reports back its current state (Z) to the control facility (40), so that the control facility (40) can also take into account the state (Z) of the vehicle and/or the environment when interpreting the relevant image or map data ($B_r$, $K_r$),
- and wherein, to the extent that speed restrictions which are established in parallel and whose validity is not only for a particular traffic lane are detected from the relevant image and map data ($B_r$, $K_r$), the control facility (40) is evaluated several times and the result of each evaluation of the control facility is fed to a parallel finite automaton (50) which is used for the interpretation of the speed restrictions which are established in parallel, wherein for this purpose, one finite automaton (50) is used for each speed restriction to be interpreted.

**2.** The method according to claim 1,
wherein in the control facility (40), the interpretation of the content of the relevant image and map data ($B_r$, $K_r$) is conducted on the basis of specific sets of rules, and the action (A) specified by the control facility (40) parameterises a behaviour to be maintained due to a detected rule.

3. The method according to either of claims 1 or 2,
wherein the finite automaton (50) issues the information (I) allocated to the transition or to the state achieved by the transition in a display or to a vehicle control system.

4. The method according to any one of the preceding claims,
wherein the finite automaton (50) is divided into a main finite automaton (51) which processes information which characterises the state (Z) of the vehicle and one or more environment finite automata (52) which depict changeable environmental conditions of the vehicle.

5. The method according to any one of the preceding claims,
wherein the first scene interpretation (10) and the second scene interpretation (20) transmit during compression to relevant image or map data ($B_r$, $K_r$) a trigger signal (T) to a trigger control (30) which generates an overall trigger signal (GT) for the control facility (40) and the finite automaton (50), wherein the overall trigger signal (GT) has the effect that the control facility (40) and the finite automaton (50) process the relevant image and map data ($B_r$, $K_r$) which is located on their internal inputs.

6. The method according to claim 5, wherein the trigger control (30) comprises an OR link of the two trigger signals (T) of the first and second scene interpretation (10, 20) for generating the overall trigger signal (GT).

7. The method according to claim 6, wherein the OR link is a delayed OR link.

8. The method according to claim 6, wherein the trigger control (30), when a first trigger signal (T) from the first or the second scene interpretation (10, 20) is present, activates a counter and generates the overall trigger signal (GT) either when a maximum counter value is reached or when the second trigger signal (T) is present.

9. The method according to any one of the preceding claims,
wherein, in the first scene interpretation (10) and/or the second scene interpretation (20), relevant image and/or map data ($B_r$, $K_r$) is selected on the basis of specified criteria, wherein relevant image and/or map data ($B_r$, $K_r$) which is recorded at different points in time is set in a time context and/or a local selection of relevant image data ($B_r$) is made.

10. The method according to any one of the preceding claims,
wherein the first scene interpretation (10) and the second scene interpretation (20) exchange information.

11. The method according to any one of the preceding claims,
wherein vehicle data (F) and/or camera status data (S) is available when detecting traffic-relevant information (I).

12. A device for detecting traffic-relevant information (I) in a moving vehicle with a connection to a system of a visual sensor (3) for receiving image data (B, B'), a connection to a navigation system (4) for receiving map data (K) and a connection to a display instrument (6) for displaying or processing the results of the detection, which is designed in particular for executing the method according to any one of claims 1 to 11,
**characterized in that**

- means for scene interpretation (10, 20) are provided, for compressing the received image data (B) from the visual sensor (3) and the map data (K) from the navigation system (4) to relevant image and map data ($B_r$, $K_r$) and for forwarding the relevant image and map data ($B_r$, $K_r$) to a computing unit with at least one finite automaton (50) and a control facility (40),
- the control facility (40) is designed to enable a resolution which conforms to the road traffic rules of contradictory situations in the relevant image and map data ($B_r$, $K_r$) and to output a corresponding output signal and to forward an action (A) to be executed to the at least one finite automaton (50),
- the at least one finite automaton (50) is designed, on the basis of the action (A) specified to it by the control facility, to implement a transition in its state space using pre-defined states (Z) which characterise properties of the moving vehicle and, if appropriate, of the environment in a manner which is unrelated to an interpretation which conforms to the road traffic rules of the state on the basis of the detection of traffic-relevant information, in which, starting from the initial state, a shift is made into a new end state, or if appropriate, back into the same end state, and to output traffic-relevant information (I) which is allocated to the transition or to the state newly achieved by the transition via the connection to a display instrument (6), and the finite automaton (50) is designed to report back its current state (Z) to the control facility (40), so that the control facility (40) can also take into account the state (Z) of the vehicle and/or the environment when interpreting the relevant image or map data (B$_r$, K$_r$), and

- a logic unit is designed in such a manner that, to the extent that it detects speed restrictions which are established in parallel and whose validity is not only for a particular traffic lane from the relevant image and map data (B$_r$, K$_r$), it effects a multiple evaluation of the control facility (40) and the result of each evaluation of the control facility is fed to a parallel finite automaton (50) which is used for the interpretation of the speed restrictions which are established in parallel, wherein for this purpose, it uses one finite automaton (50) for each speed restriction to be interpreted.

13. The device according to claim 12,
    wherein a trigger control (30) for generating an overall trigger signal (GT) is connected downstream of the means for the first scene interpretation (10) and the second scene interpretation (20).

14. The device according to either of claims 12 or 13,
    wherein the device provides a speed restriction assistance function.

**Revendications**

1. Procédé d'identification d'informations (I) importantes pour le trafic dans un véhicule en circulation, dans lequel des données d'image (B) d'un capteur visuel (3) et des données de carte (K) d'un système de navigation (4) sont interprétées pour l'identification,

   - les données d'image (B) étant examinées dans une première interprétation de scène (10) selon les informations (I) importantes pour le trafic acquises et étant comprimées sous forme de données d'image importantes (B$_r$),
   - les données de carte (K) étant examinées dans une deuxième interprétation de scène (20) selon les informations (I) importantes pour le trafic acquises et étant comprimées sous forme de données de carte importantes (K$_r$),

   **caractérisé en ce que**

   - les données d'image importantes (B$_r$) et les données de carte importantes (K$_r$) sont conduites à un système de régulation (40) et au moins à un automate à états (50) pour l'interprétation des données d'image et de carte,
   - le système de régulation (40) permettant une résolution, conforme au code de la route, de situations contradictoires dans les données d'image importantes (B$_r$) et les données de carte importantes (K$_r$), et transmettant une action à exécuter (A) à l'automate à états (50) au moins au nombre de un,
   - l'automate à états (50) au moins au nombre de un, sur la base de l'action à exécuter (A) qui lui est prescrite par le système de régulation (40), effectuant une transition dans son espace d'états dans lequel, en partant d'un état initial, il y a changement vers un nouvel état final ou éventuellement de nouveau vers le même état final, avec des états prédéfinis (Z) qui caractérisent des propriétés du véhicule en circulation et éventuellement de l'environnement du véhicule, détachées d'une interprétation, conforme au code de la route, de l'état à l'aide de l'identification d'informations importantes pour le trafic, et délivrant une information importante pour le trafic (I) affectée à la transition ou à l'état (Z) atteint par la transition,
   - l'automate à états (50) communiquant en retour son état (Z) actuel au système de régulation (40) afin que le système de régulation (40), lors de l'interprétation des données d'image ou données de carte importantes (B$_r$, K$_r$) puisse prendre également en compte l'état (Z) du véhicule et/ou de l'environnement,
   - et, dans la mesure où, à partir des données d'image et données de carte importantes (B$_r$, K$_r$), des limitations de vitesse qui sont établies parallèlement et qui n'ont aucune validité liée aux files, sont identifiées, le système de régulation (40) est analysé plusieurs fois, et le résultat de chaque analyse du système de régulation est conduit à un automate à états (50) parallèle utilisé pour l'interprétation des limitations de vitesse établies en parallèle par le fait qu'en l'occurrence un automate à états (50) est utilisé pour chaque limitation de vitesse à interpréter.

2. Procédé selon la revendication 1,
   l'interprétation du contenu des données d'image ou données de carte importantes (B$_r$, K$_r$) dans le système de régulation (40) s'effectuant à l'aide de jeux de règles spécifiques, et l'action (A) prescrite par le système de régulation (40) paramétrant un comportement à respecter sur la base d'une règle identifiée.

3. Procédé selon la revendication 1 ou 2,
l'automate à états (50) délivrant, sur un afficheur ou à une commande de véhicule, l'information (I) affectée à la transition ou à l'état atteint par la transition.

4. Procédé selon une des revendications précédentes,
l'automate à états (50) étant divisé en une machine d'état principal (51) qui traite l'information caractérisant l'état (Z) du véhicule et en une ou plusieurs machines d'états ambiants (52) qui reproduisent les conditions ambiantes du véhicule.

5. Procédé selon une des revendications précédentes, la première interprétation de scène (10) et la deuxième interprétation de scène (20) envoyant, lors de la compression sous forme de données d'image ou données de carte importantes ($B_r$, $K_r$), un signal de déclenchement (T) à une commande de déclenchement (30) qui produit un signal de déclenchement global (GT) destiné au système de régulation (40) et à l'automate à états (50), le signal de déclenchement global (GT) ayant pour effet que le système de régulation (40) et l'automate à états (50) traitent les données d'image ou données de carte importantes ($B_r$, $K_r$) présentes au niveau de leurs entrées internes.

6. Procédé selon la revendication 5, la commande de déclenchement (30) présentant une disjonction des deux signaux de déclenchement (T) des première et deuxième interprétations de scène (10, 20) pour la production du signal de déclenchement global (GT).

7. Procédé selon la revendication 6, la disjonction étant une disjonction temporisée.

8. Procédé selon la revendication 6, la commande de déclenchement (30), en présence d'un premier signal de déclenchement (T) de la première ou de la deuxième interprétation de scène (10, 20), activant un compteur et produisant le signal de déclenchement global (GT) soit lorsqu'une valeur de compteur maximale est atteinte, soit lorsque le deuxième signal de déclenchement (T) est présent.

9. Procédé selon une des revendications précédentes, des données d'image et/ou données de carte importantes ($B_r$, $K_r$) étant sélectionnées dans la première interprétation de scène (10) et/ou la deuxième interprétation de scène (20) à l'aide de critères prédéfinis par le fait que, à des moments différents, des données d'image ou données de carte importantes ($B_r$, $K_r$) détectées sont placées dans un contexte temporel et/ou par le fait qu'une sélection locale de données d'image importantes ($B_r$) est effectuée.

10. Procédé selon une des revendications précédentes, la première interprétation de scène (10) et la deuxième interprétation de scène (20) échangeant des informations.

11. Procédé selon une des revendications précédentes, des données de véhicule (F) et/ou des données de statut de caméra (S) étant disponibles lors de l'identification d'informations importantes pour le trafic (I).

12. Dispositif d'identification d'informations importantes pour le trafic (I) dans un véhicule en circulation avec une connexion à un système d'un capteur visuel (3) pour l'acquisition de données d'image (B, B'), avec une connexion à un système de navigation (4) pour l'acquisition de données de carte (K) et avec une connexion à un instrument d'affichage (6) pour la représentation ou le traitement des résultats de l'identification, qui est aménagé en particulier pour la réalisation du procédé selon une des revendications 1 à 11,
**caractérisé en ce**

- **qu'**il est prévu des moyens d'interprétation de scène (10, 20) pour la compression des données d'image (B) acquises du capteur visuel (3) et des données de carte (K) du système de navigation (4) sous forme de données d'image ou données de carte importantes ($B_r$, $K_r$), et pour la transmission des données d'image ou données de carte importantes ($B_r$, $K_r$) à une unité de calcul avec au moins un automate à états (50) et avec un système de régulation (40),
- le système de régulation (40) est aménagé pour permettre une résolution, conforme au code de la route, de situations contradictoires dans les données d'image et données de carte importantes ($B_r$, $K_r$), pour délivrer un signal de sortie correspondant et pour transmettre une action à exécuter (A) à l'automate à états (50) au moins au nombre de un,
- l'automate à états (50) au moins au nombre de un est aménagé pour, sur la base de l'action à exécuter (A) qui lui est prescrite par le système de régulation (40), exécuter une transition dans son espace d'états avec des états prédéfinis (Z) qui caractérisent des propriétés du véhicule en circulation et éventuellement de l'environnement, détachées d'une interprétation conforme au code de la route, de l'état à l'aide de l'identification d'informations importantes pour le trafic,

dans lequel, en partant de l'état initial, il y a changement vers un nouvel état final ou éventuellement de nouveau vers le même état final, et pour délivrer une information importante pour le trafic (I) affectée à la transition ou à l'état nouvellement atteint par la transition par le biais d'une connexion à un instrument d'affichage (6), et l'automate à états (50) est aménagé pour communiquer en retour son état actuel (Z) au système de régulation (40), afin que le système de régulation (40), lors de l'interprétation des données d'image ou données de carte importantes ($B_r$, $K_r$), puisse prendre également en compte l'état (Z) du véhicule et/ou de l'environnement, et

- une unité logique est réalisée de telle sorte que, dans la mesure où, à partir des données d'image et données de carte importantes ($B_r$, $K_r$), elle identifie des limitations de vitesse qui sont établies parallèlement et qui n'ont aucune validité liée aux files, elle provoque une analyse multiple du système de régulation (40) et conduit le résultat de chaque analyse à un automate à états (50) parallèle utilisé pour l'interprétation des limitations de vitesse établies en parallèle par le fait qu'elle utilise en l'occurrence un automate à états (50) pour chaque limitation de vitesse à interpréter.

**13.** Dispositif selon la revendication 12,
une commande de déclenchement (30) destinée à produire un signal de déclenchement global (GT) étant montée en aval des moyens destinés à la première interprétation de scène (10) et à la deuxième interprétation de scène (20).

**14.** Dispositif selon la revendication 12 ou 13, le dispositif fournissant une assistance à la limitation de vitesse.

Fig. 1

EP 2 149 132 B1

Fig. 2

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19938261 A1
- DE 19938267 A1
- DE 19938266 A1
- DE 10354910 A1
- EP 1114371 B1
- EP 1145186 B1
- EP 1503354 A1